(19) Europäisches Patentamt
European Patent Office
Office européen des brevets

(11) EP 3 876 321 A2

(12) # EUROPÄISCHE PATENTANMELDUNG

(43) Veröffentlichungstag:
**08.09.2021 Patentblatt 2021/36**

(21) Anmeldenummer: **21160863.3**

(22) Anmeldetag: **05.03.2021**

(51) Int Cl.:
***H01M 8/04014*** *(2016.01)* ***H01M 8/04089*** *(2016.01)*
***H01M 8/04313*** *(2016.01)* ***H01M 8/0438*** *(2016.01)*
*H01M 8/04291* *(2016.01)*

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **06.03.2020 DE 102020202873**

(71) Anmelder: **Robert Bosch GmbH**
**70442 Stuttgart (DE)**

(72) Erfinder:
- **Hering, Martin**
  **Niskayuna, NY, 12309 (US)**
- **Egger, Sebastian**
  **71139 Ehningen (DE)**
- **Carre, Maxime**
  **70469 Stuttgart (DE)**
- **Schaefer, Felix**
  **71069 Sindelfingen (DE)**

(54) **VERFAHREN ZUR ÜBERWACHUNG EINES BRENNSTOFFZELLENSYSTEMS**

(57) Die Erfindung geht aus von einem Verfahren zur Überwachung eines Brennstoffzellensystems, insbesondere eines Festoxidbrennstoffzellensystems, welches in zumindest einem Verfahrensschritt in mehrere Unterbaugruppen (14, 16, 18, 19, 20, 22, 24, 26, 28, 30, 31, 32, 33, 34, 35) unterteilt wird und wobei in zumindest einem Verfahrensschritt ein charakteristischer Systemparameter, insbesondere eine Brennstoffnutzung, des Brennstoffzellensystems ermittelt wird.

Es wird vorgeschlagen, dass in zumindest einem Verfahrensschritt eine Betriebscharakteristik zumindest einer der Unterbaugruppen (14, 16, 18, 19, 20, 22, 24, 26, 28, 30, 31, 32, 33, 34, 35) des Brennstoffzellensystems zur Implementierung eines Softsensors für den Systemparameter verwendet wird.

Fig. 3
60
40,40'
74
40
10
46
64
56
40'
40'
78
75
68
82
80
36
84
62
42,42'
58
46
66
76
40
42'
42
42'
70
38
86

EP 3 876 321 A2

**Beschreibung**

Stand der Technik

Es ist bereits ein Verfahren zur Überwachung eines Brennstoffzellensystems, insbesondere eines Festoxidbrennstoffzellensystems, vorgeschlagen worden, bei welchem das Brennstoffzellensystem in zumindest einem Verfahrensschritt in mehrere Unterbaugruppen unterteilt wird und in zumindest einem Verfahrensschritt ein charakteristischer Systemparameter, insbesondere eine Brennstoffnutzung, des Brennstoffzellensystems ermittelt wird.

Offenbarung der Erfindung

Die Erfindung geht aus von einem Verfahren zur Überwachung eines Brennstoffzellensystems, insbesondere eines Festoxidbrennstoffzellensystems, welches in zumindest einem Verfahrensschritt in mehrere Unterbaugruppen unterteilt wird und bei welchem in zumindest einem Verfahrensschritt ein charakteristischer Systemparameter, insbesondere eine Brennstoffnutzung, des Brennstoffzellensystems ermittelt wird.

Es wird vorgeschlagen, dass in zumindest einem Verfahrensschritt eine Betriebscharakteristik zumindest einer der Unterbaugruppen des Brennstoffzellensystems zur Implementierung eines Softsensors für den Systemparameter verwendet wird. Vorzugsweise umfasst das Brennstoffzellensystem als Funktionseinheit zumindest eine Brennstoffzelleneinheit, welche insbesondere zumindest eine Brennstoffzelle, einen Stack aus Brennstoffzellen und/oder einem Verbund mehrerer Stacks aus Brennstoffzellen umfasst. Vorzugsweise ist die Brennstoffzelle und/oder sind die Brennstoffzellen der Brennstoffzelleneinheit als Hochtemperaturbrennstoffzellen ausgebildet. Vorzugsweise ist die Brennstoffzelleneinheit dazu vorgesehen, einen Brennstoff unter Zuführung eines Oxidans in einem Wandlungsprozess zu einer elektrischen Energiegewinnung umzusetzen. Vorzugsweise ist der Brennstoff als Erdgas ausgebildet. Es ist auch denkbar, dass der Brennstoff als Hauptenergieträger andere Kohlenwasserstoffverbindungen und/oder Wasserstoff als Gemisch oder als Reinstoff umfasst. Vorzugsweise ist das Oxidans als Umgebungsluft ausgebildet. Es ist aber auch denkbar, dass das Oxidans als Industriefluid, vorzugsweise mit einem dokumentierten Sauerstoffanteil, ausgebildet ist. Vorzugsweise umfasst die Brennstoffzelleneinheit zumindest eine Brennstoffelektrode, welche vorzugsweise während des Wandlungsprozesses zu einem direkten Kontakt mit dem Brennstoff vorgesehen ist. Vorzugsweise umfasst die Brennstoffzelleneinheit zumindest eine Oxidanselektrode, welche vorzugsweise während des Wandlungsprozesses zu einem direkten Kontakt mit dem Oxidans vorgesehen ist. Ohne darauf beschränkt zu sein, umfasst die Brennstoffzelleneinheit beispielsweise zumindest eine Schmelzkarbonatbrennstoffzelle (MCFC) und/oder besonders bevorzugt zumindest eine Festoxidbrennstoffzelle (SOFC).

Vorzugsweise umfasst das Brennstoffzellensystem zumindest eine weitere Funktionseinheit, welche einen Betrieb der Brennstoffzelleneinheit ermöglicht und/oder unterstützt, insbesondere dazu vorgesehen ist, den Brennstoff und/oder das Oxidans zu handhaben. Unter "vorgesehen" soll vorzugsweise speziell eingerichtet, speziell ausgelegt und/oder speziell ausgestattet verstanden werden. Darunter, dass ein Objekt zu einer bestimmten Funktion vorgesehen ist, soll vorzugsweise verstanden werden, dass das Objekt diese bestimmte Funktion in zumindest einem Anwendungs- und/oder Betriebszustand erfüllt und/oder ausführt. Eine Handhabung des Brennstoffs und/oder des Oxidans umfasst, ohne darauf beschränkt zu sein, beispielsweise eine Zufuhr zu der Brennstoffzelleneinheit, eine Abfuhr von aus der Brennstoffzelleneinheit austretenden Umsetzungsprodukten, eine Temperierung , eine Wärmerückgewinnung aus den Umsetzungsprodukten, eine Aufbereitung und/oder Vorverarbeitung, eine Verwertung von Restmengen an Brennstoff, welcher den Umsetzungsprodukten beigemengt ist, oder dergleichen. Beispiele für weitere Funktionseinheiten umfassen zumindest eine Brennstoffleitung zu der Brennstoffzelleneinheit hin, zumindest eine Oxidansleitung zu der Brennstoffzelleneinheit hin, zumindest eine Abfuhrleitung von der Brennstoffzelleneinheit weg, zumindest eine Brennstofffördereinheit, zumindest eine Oxidansfördereinheit, zumindest eine Rezirkulationsfördereinheit für eine Rückführung eines aus der Brennstoffzelleneinheit austretenden Fluids, zumindest einen Wärmeübertrager und/oder zumindest einen Nachbrenner oder dergleichen.

Vorzugsweise umfasst das Brennstoffzellensystem zumindest eine Recheneinheit. Unter einer "Recheneinheit" soll insbesondere eine Einheit mit einem Informationseingang, einer Informationsverarbeitung und einer Informationsausgabe verstanden werden. Vorteilhaft weist die Recheneinheit zumindest einen Prozessor, einen Speicher, Ein- und Ausgabemittel, weitere elektrische Bauteile, ein Betriebsprogramm, Regelroutinen, Steuerroutinen und/oder Berechnungsroutinen auf. Insbesondere kann die Recheneinheit lokal zusammen mit den Funktionseinheiten angeordnet sein oder auf einem externen Gerät, beispielsweise einem Server, implementiert sein, welches insbesondere mit einer lokalen Steuereinheit des Brennstoffzellensystems kommuniziert. Vorzugsweise ermittelt die Recheneinheit in zumindest einem Verfahrensschritt den charakteristischen Systemparameter. Insbesondere ist der charakteristische Systemparameter ein Betriebsparameter, der eine, insbesondere brennstoffspezifische, Effizienz und/oder Effektivität des Wandlungsprozesses mittels des Brennstoffzellensystems beschreibt oder charakterisiert. Beispielsweise ermittelt die Recheneinheit als Systemparameter eine Brennstoffnutzung der Brennstoffzelleneinheit, eine Brennstoffnutzung des Brennstoffzellensystems, eine Brennstoffkenngröße des Brennstoffs und/oder eine Rezirkulationsrate des Brennstoffzellensystems. Typischerweise ist der Systemparameter abhängig von einer Zusammensetzung des verwendeten Brennstoffs. Vorzugsweise ermittelt die Steuereinheit den Systemparameter unabhängig von einer Kenntnis und/oder einer direkten Erfassung der Zusammensetzung des verwendeten Brennstoffs. Insbesondere ermittelt und/oder charakterisiert die Steuereinheit in zumindest einem Verfahrensschritt die Zusammensetzung des Brennstoffs in Abhängigkeit von zur Verfügung stehenden Betriebsparametern des Brennstoffzellensystems und/oder der Betriebscharakteristik.

Vorzugsweise fasst die Recheneinheit die Funktionseinheiten in den Unterbaugruppen zusammen. Insbesondere umfassen die Unterbaugruppen jeweils eine oder mehrere der Funktionseinheiten. Optional ordnet die Recheneinheit dieselbe Funktionseinheit verschiedenen Unterbaugruppen zu. Vorzugsweise unterscheiden sich verschiedene Unterbaugruppen durch zumindest eine Funktionseinheit. Vorzugsweise umfasst jede der Unterbaugruppen zumindest eine Funktionseinheit, welche von dem Brennstoff, dem Oxidans und/oder einem aus der Brennstoffzelleneinheit austretenden Fluid durchflossen wird.

Vorzugsweise ruft die Recheneinheit aus dem Speicher die Betriebscharakteristik zumindest einer Unterbaugruppe zur Ermittlung des charakteristischen Systemparameters ab. Insbesondere beschreibt die Betriebscharakteristik eine betriebsparameterabhängige Größe oder Kennzahl der Unterbaugruppe, welche insbesondere abhängig von einer Auslegung der Unterbaugruppe und/oder dem konkreten Aufbau des Brennstoffzellensystems ist. Insbesondere ist die Betriebscharakteristik in dem Speicher explizit, beispielsweise als Kennlinie, als Tabellenwerk, als Regressionsfunktion oder dergleichen, oder implizit, beispielsweise als Resultat eines Maschinenlernprozesses, hinterlegt. Optional sind in dem Speicher Betriebscharakteristika zu verschiedenen Baugruppen hinterlegt. Alternativ ist in dem Speicher genau eine, insbesondere brennstoffzellensystemspezifische Betriebscharakteristik, hinterlegt. Insbesondere wählt die Recheneinheit zumindest eine der in dem Speicher hinterlegten Betriebscharakteristika in Abhängigkeit von zur Verfügung stehenden Betriebsparametern aus, welche insbesondere im Zuge einer Steuerung des Brennstoffzellensystems erfasst und/oder eingestellt werden. Typischerweise werden zu einer Steuerung des Brennstoffzellensystems zumindest eine Temperatur einer der Funktionseinheiten, des Brennstoffs und/oder des Oxidans, ein Volumenstrom des Brennstoffs und/oder des Oxidans, ein von der Brennstoffzelleneinheit erzeugter elektrischer Strom oder dergleichen von der Steuereinheit des Brennstoffzellensystems zumindest erfasst und vorzugsweise geregelt. Insbesondere fragt die Recheneinheit in zumindest einem Verfahrensschritt die zur Verfügung stehenden Betriebsparameter von der Steuereinheit des Brennstoffzellensystems und/oder von Sensorelementen des Brennstoffzellensystems ab. Optional fragt die Recheneinheit von der Steuereinheit ab, ob weitere Betriebsparameter, beispielsweise aus anwendungsspezifischen Sensorelementen, und/oder ein weiterer Systemparameter zur Verfügung stehen. Vorzugsweise verwendet die Recheneinheit die der Baugruppe zugeordnete Betriebscharakteristik, insbesondere zusammen mit den abgefragten Betriebsparametern, um den charakteristischen Systemparameter zu ermitteln. Insbesondere implementiert die Recheneinheit mittels der Betriebscharakteristik einen Softsensor für den charakteristischen Systemparameter. Vorzugsweise ermittelt die Recheneinheit den charakteristischen Systemparameter in Echtzeit, insbesondere zu einer Regelung der Betriebsparameter in Abhängigkeit von dem Systemparameter. Unter "Echtzeit" soll insbesondere schneller als eine mittlere Reaktionsgeschwindigkeit des Brennstoffzellensystems auf eine Änderung eines der Betriebsparameter verstanden werden.

Durch die erfindungsgemäße Ausgestaltung kann ein Betrieb des Brennstoffzellensystems, insbesondere der charakteristische Systemparameter, vorteilhaft bauteilarm überwacht werden. Insbesondere kann auf zeitintensive, platzverbrauchende und/oder kostenintensive Sensorelemente, wie insbesondere Lambda-Sonden, Partikelsensoren, Gasanalysegeräte oder dergleichen, verzichtet werden. Insbesondere kann das Verfahren auf einer vorteilhaft großen Anzahl an, insbesondere bereits bestehenden, Brennstoffzellensystemen, insbesondere ohne Umrüstung, angewandt werden. Insbesondere kann das Brennstoffzellensystem vorteilhaft effizient betrieben werden. Insbesondere kann ein Rechenaufwand, Energieaufwand und/oder Zeitaufwand zu einer Simulation und/oder Berechnung des charakteristischen Systemparameters vorteilhaft klein gehalten werden.

Weiter wird vorgeschlagen, dass in zumindest einem Verfahrensschritt mittels der Betriebscharakteristik eine Leistungsbilanz zumindest einer der Unterbaugruppen erstellt wird. Insbesondere stellt die Recheneinheit Energiezuflüsse zu einer der Unterbaugruppen Energieabflüssen aus derselben Unterbaugruppe gegenüber. Insbesondere stellt die Recheneinheit leitungsgebundene Energieflüsse, insbesondere Enthalpieflüsse, zu und aus einer der Unterbaugruppen einem, insbesondere nicht-leitungsgebundenen Wärmefluss, insbesondere einem Wärmeverlust, an dieser Unterbaugruppe gegenüber. Bevorzugt erstellt die Recheneinheit die Leistungsbilanz in einem stationären Zustand, insbesondere an einem stabilen Arbeitspunkt, des Brennstoffzellensystems. Optional umfasst die Leistungsbilanz einer der Unterbaugruppen eine elektrische Leistung, welche dieser Unterbaugruppe zu einem Betrieb zugeführt wird und/oder von dieser Unterbaugruppe abgegriffen wird. Insbesondere wird ein leitungsgebundener Energiefluss, insbesondere Enthalpiefluss zumindest im Wesentlichen von einem innerhalb von Leitungen des Brennstoffzellensystems stattfindendem, insbesondere erzwungenem, Massetransport, insbesondere des Brennstoffs, des Oxidans, des aus der Brennstoffzelleneinheit und/oder aus dem Nachbrenner austretenden Fluids, verursacht. Insbesondere tauscht der nichtleitungsgebundene Wärmefluss Wärme mit einer Umgebung der Unterbaugruppe über Wärmeleitung, Wärmestrahlung und/oder Konvektion aus. Insbesondere ist der Wärmefluss abhängig von einer konkreten Auslegung der Unterbaugruppe, ihrer Anordnung innerhalb des Brennstoffzellensystems und/oder anderen strukturellen Gegebenheiten. Insbesondere stellt die Recheneinheit für eine der Unterbaugruppen die Leistungsbilanz

$$\sum_i \dot{H}_i + \dot{Q} + P_{el} = 0$$

auf. Insbesondere bezeichnet $\dot{H}_i$ die leitungsgebundenen Enthalpieflüsse, Q den Wärmefluss und $P_{el}$ die elektrische Leistung. Insbesondere verwendet die Recheneinheit für die Enthalpie-flüsse einen Ausdruck, welcher als Unbekannte den Systemparameter aufweist. Vorzugsweise ist der Systemparameter die einzige Unbekannte für die Enthalpieflüsse. Insbesondere wählt die Recheneinheit diejenige Unterbaugruppe aus, für die die Enthalpieflüsse bis auf den Systemparameter aus den zur Verfügung stehenden Betriebsparametern ermittelbar sind. Insbesondere setzt die Recheneinheit für von dem Systemparameter unterschiedliche Größen der Enthalpieflüsse die von der Steuereinheit oder von den Sensorelementen abgefragten Betriebsparameter ein. Vorzugsweise ermittelt die Recheneinheit aus der Leistungsbilanz zumindest den charakteristischen Systemparameter. Durch die erfindungsgemäße Ausgestaltung kann mit vorteilhaft wenigen Betriebsparametern, insbesondere vorteilhaft wenigen Sensorelementen, der charakteristische Systemparameter bestimmt werden.

Ferner wird vorgeschlagen, dass zumindest eine der Unterbaugruppen, deren Leistungsbilanz erstellt wird, einen, insbesondere den bereits genannten, Nachbrenner des Brennstoffzellensystems umfasst. Beispielsweise umfasst zumindest eine der Unterbaugruppen, insbesondere als leistungsbilanztechnisch relevante Funktionseinheit, ausschließlich den Nachbrenner, insbesondere welche zu einer Unterscheidung auch als Brennergruppe bezeichnet wird. Beispielsweise umfasst zumindest eine der Unterbaugruppen, deren Leistungsbilanz erstellt wird, insbesondere welche zu einer Unterscheidung auch als Rezirkulationsbrennergruppe bezeichnet wird, neben dem Nachbrenner weitere der Funktionseinheiten, beispielsweise alle in einer durch die Rezirkulationsleitung definierten Leitungsschleife angeordneten Funktionseinheiten, insbesondere die Brennstoffzelleneinheit, den zumindest einen Wärmeübertrager, den Reformer und die Rezirkulationsfördereinheit. Insbesondere umfasst zumindest eine der Unterbaugruppen, deren Leistungsbilanz erstellt wird, insbesondere welche zu einer Unterscheidung auch als Systemgruppe bezeichnet wird, neben dem Nachbrenner und neben allen in der durch die Rezirkulationsleitung definierten Leitungsschleife angeordneten Funktionseinheiten, insbesondere die Brennstoffzelleneinheit, den zumindest einen Wärmeübertrager, den Reformer und die Rezirkulationsfördereinheit, eine als Abgasoxidanswärmeübertrager ausgebildete Funktionseinheit. Insbesondere fungiert eine der Unterbaugruppen, beispielsweise die Brennergruppe, als Kalorimeter. Beispielsweise stellt die Recheneinheit bei der Brennergruppe die Leistungsbilanz

$$\dot{Q}_{nb} = \dot{H}_{bs,nb\ ein} + \dot{H}_{ox,nb\ ein} - \dot{H}_{ab,nb\ aus} + P_{el,nb}$$

zumindest aus einem von dem Brennstoff getragenen Enthalpiezufluss $\dot{H}_{bs,nb\ ein}$, aus einem von dem Oxidans getragenen Enthalpiezufluss $\dot{H}_{ox,nb\ ein}$, aus einem von mit dem Nachbrenner erzeugten Abgas getragenen Enthalpieabfluss $\dot{H}_{ab,nb\ aus}$, aus einen Wärmefluss $\dot{Q}_{nb}$, insbesondere Wärmeverlust, des Nachbrenners und optional einer von dem Nachbrenner aufgenommenen elektrischen Leistung $P_{el,nb}$ zusammen.

Vorzugsweise sind in dem Speicher Ausdrücke für Terme der Leistungsbilanz hinterlegt, welche nur von den zur Verfügung stehenden Betriebsparametern, von fixen Parametern und/oder dem charakteristischen Systemparameter, insbesondere der Brennstoffkenngröße, abhängen. Ein Datenobjekt, das im Speicher der Recheneinheit hinterlegt wurde, insbesondere die Betriebscharakteristik, einer der Ausdrücke, eine Regressionsfunktion, eine Identität oder dergleichen, kann als Einzelobjekt in dem Speicher hinterlegt sein oder in einer mit einem anderen Datenobjekt verknüpften, insbesondere in verkürzter Form, beispielsweise bereits in eine Gleichung eingesetzten, Form in dem Speicher hinterlegt sein. Insbesondere umfassen die von der Recheneinheit abgefragten Betriebsparameter eine Temperatur des Abgases bei einem Austritt aus dem Nachbrenner, eine Temperatur eines aus der Oxidanselektrode austretenden Fluids, eine Temperatur eines von der Brennstoffelektrode kommenden und in den Nachbrenner eintretenden Fluids, einen Volumenstrom des Brennstoffs bei Eintritt in das Brennstoffzellensystem, einen Volumenstrom des Oxidans bei Eintritt in das Brennstoffzellensystem und eine von der Brennstoffzelleneinheit abgegriffene elektrische Stromstärke. Unter einem "fixen" Parameter soll insbesondere ein Parameter verstanden werden, der unabhängig von einem Betrieb des Brennstoffzellensystems ist. Typischerweise fixe Parameter umfassen eine, insbesondere molare, Sauerstoffkonzentration in dem Brennstoffzellensystem. Insbesondere kann die Brennstoffkenngröße fix, insbesondere bei einer Verwendung eines im Vorfeld analysierten Brennstoffs oder eines Reinstoffs als Brennstoff, oder unbekannt sein. Insbesondere löst die Recheneinheit die Leistungsbilanz in zumindest einem Verfahrensschritt, vorzugsweise mit einem numerischen Verfahren, insbesondere ausgehend von einem Startwert iterativ, beispielsweise mit dem Newton-Verfahren, nach der, insbesondere unbekannten, Brennstoffkenngröße. Optional löst die Recheneinheit die Leistungsbilanz, beispielsweise die in der Brennstoffkenngröße quadratische Leistungsbilanz der Brennergruppe, analytisch. Vorzugsweise ermittelt die Recheneinheit aus der Brennstoffkenngröße die Brennstoffnutzung des Brennstoffzellensystems. Optional aktualisiert die Recheneinheit in zumindest einem Verfahrensschritt die Ausdrücke für die Terme der Leistungsbilanz, insbesondere die Betriebscharakteristik, mittels Abfrage von einer externen, insbesondere serverbasierten, Datenbank. Durch die erfindungsgemäße Ausgestaltung kann der Nachbrenner vorteilhaft als Kalorimeter verwendet werden. Insbesondere kann eine vorteilhaft große Anzahl an Parametern zu einer Charakterisierung eines unbekannten Brennstoffs, insbesondere parallel zu einem Betrieb des Brennstoffzellensystems, ermittelt werden.

Weiterhin wird vorgeschlagen, dass in zumindest einem Kalibrierungsschritt die Betriebscharakteristik, insbesondere ein Wärmeverlust, einer der Unterbaugruppen ermittelt wird. Insbesondere wird in dem Kalibrierungsschritt der Wärmefluss der Leistungsbilanz für zumindest eine der Unterbaugruppen ermittelt. Vorzugsweise wird der Wärmefluss der Unterbaugruppe aus der Leistungsbilanz ermittelt, indem das Brennstoffzellensystem mit einem Kalibrierungsbrennstoff mit bekannter Brennstoffkenngröße, beispielsweise reinem Methan, betrieben wird. Alternativ wird eine Zusammensetzung des Kalibrierungsbrennstoffs in dem Kalibrierungsschritt, insbesondere werksseitig, beispielsweise mittels Gaschromatographie oder dergleichen, erfasst, um dessen Brennstoffkenngröße zu ermitteln. Vorzugsweise wird in dem Kalibrierungsschritt die Leistungsbilanz des Brennstoffzellensystems an verschiedenen Arbeitspunkten ausgewertet. Insbesondere wird in dem Kalibrierungsschritt eine arbeitspunktabhängige Regressionsfunktion für den Wärmefluss erstellt. Insbesondere wird die Regressionsfunktion nach einem an sich bekannten Verfahren ermittelt, beispielsweise einem Verfahren basierend auf der Methode der kleinsten Quadrate, basierend auf der Maximum-Likelihood-Methode, basierend auf einer Gaußprozess-Regression oder dergleichen. Beispielsweise wird die arbeitspunktabhängige Regressionsfunktion, insbesondere für die Brennergruppe, in Abhängigkeit von der von der Brennstoffzelleneinheit abgegriffenen elektrischen Stromstärke, von der Temperatur des Abgases bei einem Austritt aus dem Nachbrenner und der Temperatur des aus der Oxidanselektrode austretenden Fluids erfasst. Beispielsweise wird die arbeitspunktabhängige Regressionsfunktion, insbesondere für eine den Reformer umfassende Unterbaugruppe, in Abhängigkeit von einer Temperatur des Brennstoffs bei einem Eintritt in den Reformer, einer Temperatur des reformierten Brennstoffs bei einem Austritt aus dem Reformer und von einer von der Brennstoffzelleneinheit abgegriffenen elektrischen Stromstärke erfasst. Optional wird die arbeitspunktabhängige Regressionsfunktion, insbesondere zusätzlich, in Abhängigkeit von einer Außentemperatur der Unterbaugruppe, insbesondere des Brennstoffzellensystems, erfasst. Alternativ oder zusätzlich wird in dem Kalibrierungsschritt der aus der Leistungsbilanz arbeitspunktabhängige Wärmefluss und/oder eine Abweichung der Regressionsfunktion von einem tatsächlichen Wert des Wärmeflusses mittels eines maschinellen Lernprozesses erfasst. Durch die erfindungsgemäße Ausgestaltung kann ein Rechenaufwand während eines Betriebs des Brennstoffzellensystems vorteilhaft gering gehalten werden. Insbesondere kann der charakteristische Systemparameter vorteilhaft schnell ermittelt werden.

Des Weiteren wird vorgeschlagen, dass in zumindest einem Verfahrensschritt als Betriebscharakteristik zumindest eine Kennlinie einer der Unterbaugruppen ausgewertet wird, welche einen Einfluss auf einen Durchfluss eines Betriebsstoffs des Brennstoffzellensystems aufweist. Insbesondere kann der Betriebsstoff der Brennstoff, das Oxidans, eines der die Brennstoffzelleneinheit verlassenden Fluide und/oder das den Nachbrenner verlassende Abgas sein. Insbesondere hat eine Unterbaugruppe einen Einfluss auf den Durchfluss, wenn der Durchfluss des Betriebsstoffs als, insbesondere nicht-konstante, Funktion eines, insbesondere einstellbaren, Betriebsparameters der Unterbaugruppe darstellbar ist. Beispielsweise übt die Unterbaugruppe Einfluss durch eine Druckänderung, Temperaturänderung, Dichteänderung und/oder Zusammensetzung des Betriebsstoffs aus. Beispielsweise wird der Durchfluss des Betriebsstoffs durch einen Strömungsparameter wie Volumenstrom, Massenstrom, Strömungsgeschwindigkeit oder dergleichen beschrieben. Vorzugsweise umfasst die Kennlinie den Systemparameter, insbesondere die Brennstoffkenngröße oder die Rezirkulationsrate, als unabhängige Variable oder als Parameter, der insbesondere eine Kennlinienschar definiert. Insbesondere kann die Kennlinie bekannt sein, insbesondere aus Herstellerangaben zu Bauteilen der Unterbaugruppe, oder in dem Kalibrierungsschritt mit dem bekannten Kalibrierungsbrennstoff ermittelt werden. Insbesondere wertet die Recheneinheit die zur Verfügung stehenden Betriebsparameter und die Kennlinie, insbesondere die Kennlinienschar, aus, um den Systemparameter zu ermitteln. Beispielsweise umfasst die auf den Durchfluss Einfluss ausübende Unterbaugruppe die Brennstofffördereinheit und/oder die Rezirkulationsfördereinheit, welche insbesondere zu einer Unterscheidung auch als Fördergruppe bezeichnet wird. Durch die erfindungsgemäße Ausgestaltung können Unterbaugruppen des Brennstoffzellensystems vorteilhaft als Sensoren fungieren. Insbesondere kann eine vorteilhaft große Anzahl an Betriebsparametern aus einer einzelnen Messung, beispielsweise Temperaturmessung, ermittelt werden. Insbesondere kann vorteilhaft auf zusätzliche Sensorelemente verzichtet werden. Darüber hinaus wird vorgeschlagen, dass in zumindest einem Verfahrensschritt, um den Systemparameter zu ermitteln, die Betriebscharakteristik zumindest einer der Unterbaugruppen mittels eines Gleichungssystems mit dem Systemparameter in Beziehung gesetzt wird. Insbesondere wird die Betriebscharakteristik mit der Brennstoffkenngröße oder der Rezirkulationsrate in Beziehung gesetzt. Insbesondere wird die als Kennlinie ausgebildete Betriebscharakteristik mit dem Systemparameter in Beziehung gesetzt. Vorzugsweise umfasst das Gleichungssystem zumindest zwei Kennlinien der Unterbaugruppe, wovon zumindest eine den Einfluss der Unterbaugruppe auf den Durchfluss beschreibt und zumindest eine den Systemparameter als unabhängige Variable oder Parameter aufweist. Vorzugsweise umfasst das Gleichungssystem zumindest eine, vorzugsweise genau eine, Gleichung mehr als das Gleichungssystem Unbekannte aufweist. Vorzugsweise löst die Recheneinheit das Gleichungssystem nach dem Systemparameter auf. Vorzugsweise löst die Recheneinheit das Gleichungssystem numerisch, insbesondere ausgehend von einem Startwert iterativ. Durch die erfindungsgemäße Ausgestaltung können Korrelationen zwischen Betriebsparametern verschiedener Bauteile des Brennstoffzellensystems vorteilhaft genutzt werden, um den charakteristischen Systemparameter zu ermitteln.

Weiter wird vorgeschlagen, dass in zumindest einem Verfahrensschritt eine Betriebscharakteristik zumindest einer der Unterbaugruppen des Brennstoffzellensystems zur Implementierung eines Softsensors für einen weiteren Systemparameter verwendet wird, wobei einer der ermittelten Systemparameter zur Ermittlung des anderen verarbeitet wird. Insbesondere umfasst das Verfahren eine Systemphase, in welcher die Recheneinheit den Systemparameter ermittelt, welcher insbesondere das gesamte Brennstoffzellensystem charakterisiert. Insbesondere ermittelt die Recheneinheit in der Systemphase als Systemparameter die Brennstoffkenngröße und in Abhängigkeit von dieser die Brennstoffnutzung des Brennstoffzellensystems. Insbesondere umfasst das Verfahren eine Teilsystemphase, in welcher die Recheneinheit den weiteren Systemparameter ermittelt, welcher insbesondere eine Unterbaugruppe des Brennstoffzellensystems, insbesondere die Brennstoffzelleneinheit, charakterisiert. Insbesondere ermittelt die Recheneinheit in der Teilsystemphase als Systemparameter die Rezirkulationsrate und in Abhängigkeit von dieser eine Brennstoffnutzung der Brennstoffzelleneinheit. Vorzugsweise geht die Systemphase der Teilsystemphase voraus. Insbesondere berechnet die Recheneinheit in der Teilsystemphase die Brennstoffnutzung der Brennstoffzelleneinheit in Abhängigkeit von der Brennstoffnutzung des Brennstoffzellensystems. Optional entfällt die Systemphase, insbesondere bei Verwendung eines Brennstoffs mit bekannter Brennstoffkenngröße. Optional entfällt die Teilsystemphase, insbesondere bei Verwendung eines Brennstoffzellensystems ohne Rezirkulationsleitung. Insbesondere nutzt die Recheneinheit die Kennlinie zur Ermittlung des Systemparameters und/oder des weiteren Systemparameters. Insbesondere stellt die Recheneinheit das Gleichungssystem in der Systemphase oder in der Teilsystemphase auf. Optional stellt die Recheneinheit in der Systemphase und der Teilsystemphase in analoger Weise jeweils ein den jeweiligen Systemparameter aufweisendes Gleichungssystem auf. Insbesondere stellt die Recheneinheit die Leistungsbilanz in der Systemphase oder in der Teilsystemphase auf. Optional stellt die Recheneinheit in der Systemphase und der Teilsystemphase in analoger Weise jeweils eine Leistungsbilanz für den entsprechenden Systemparameter auf. Optional ermittelt die Recheneinheit zumindest einen der Systemparameter, insbesondere zur Ergänzung, Gegenprobe oder Mittelung, mittels des Gleichungssystems und der Leistungsbilanz. Vorzugsweise wählt die Recheneinheit in der Systemphase eine Unterbaugruppe, welche die durch die Rezirkulationsleitung definierte Leitungsschleife vollständig umfasst oder vollständig ausschließt. Vorzugsweise wählt die Recheneinheit in der Teilsystemphase eine Unterbaugruppe, welche zumindest eine Funktionseinheit umfasst, welche innerhalb der durch die Rezirkulationsleitung definierten Leitungsschleife angeordnet ist. Beispielsweise wählt die Recheneinheit die den Nachbrenner umfassenden Unterbaugruppe in der Systemphase. Durch die erfindungsgemäße Ausgestaltung können vorteilhaft viele charakteristische Systemparameter ermittelt werden. Insbesondere können verschiedene charakteristische Systemparameter mit vorteilhaft ähnlichen Verfahrensschritten erfasst werden. Insbesondere kann eine Komplexität, insbesondere eine notwendige Rechenleistung, der Recheneinheit vorteilhaft gering gehalten werden.

Weiterhin wird vorgeschlagen, dass zumindest eine der Unterbaugruppen, deren Leistungsbilanz erstellt wird, einen Reformer des Brennstoffzellensystems umfasst. Beispielsweise umfassen die Systemgruppe und/oder die Rezirkulationsbrennergruppe den Reformer. Insbesondere umfasst eine der Unterbaugruppen, insbesondere als leistungsbilanztechnisch relevante Funktionseinheit, ausschließlich den Reformer, welche zu einer Unterscheidung auch als Reformergruppe bezeichnet wird. Insbesondere wählt die Funktionseinheit die Reformergruppe in der Teilsystemphase aus. Insbesondere erstellt die Recheneinheit für die Reformergruppe eine Leistungsbilanz, um den weiteren Systemparameter zu ermitteln. Beispielsweise stellt die Recheneinheit bei der Reformergruppe die Leistungsbilanz

$$\dot{Q}_{ref} = \dot{H}_{bs,ref\ in} - \dot{H}_{bs,ref\ aus} + P_{el,ref}$$

zumindest aus einem von dem Brennstoff getragenen Enthalpiezufluss $\dot{H}_{bs,ref\,ein}$ zu dem Reformer, einem von aus dem Reformer austretenden reformierten Brennstoff getragenen Enthalpieabfluss $\dot{H}_{bs,ref\,aus}$, einem Wärmefluss $\dot{Q}_{ref}$, insbesondere Wärmeverlust, des Reformers und optional einer von dem Reformer aufgenommene elektrische Leistung $P_{el,ref}$ zusammen.

Vorzugsweise sind in dem Speicher Ausdrücke für Terme der Leistungsbilanz, insbesondere für die Teilsystemphase, hinterlegt, welche nur von den zur Verfügung stehenden Betriebsparametern, von fixen Parametern, dem weiteren Systemparameter, insbesondere der Rezirkulationsrate, abhängen. Insbesondere fragt die Recheneinheit als Betriebsparameter in zumindest einem Verfahrensschritt eine Temperatur des Brennstoffs bei einem Eintritt in den Reformer, eine Temperatur des reformierten Brennstoffs bei einem Austritt aus dem Reformer, einen Volumenstrom des Brennstoffs bei Eintritt in das Brennstoffzellensystem und eine von der Brennstoffzelleneinheit abgegriffene elektrische Stromstärke ab. Typischerweise fixe Parameter umfassen die, insbesondere in der Systemphase und/oder anderweitig ermittelte, Brennstoffkenngröße. Insbesondere in dem Kalibrierungsschritt wird die Rezirkulationsrate mittels eines externen Messverfahrens, beispielsweise Gaschromatographie, erfasst, insbesondere um den Wärmefluss, insbesondere bei verschiedenen Arbeitspunkten des Brennstoffzellensystems, mittels der Leistungsbilanz zu ermitteln. Insbesondere löst die Recheneinheit die Leistungsbilanz in der Teilsystemphase, vorzugsweise mit einem numerischen Verfahren, insbesondere ausgehend von einem Startwert iterativ, beispielsweise mit dem Newton-Verfahren, nach der, insbesondere unbekannten, Rezirkulationsrate auf. Vorzugsweise ermittelt die Recheneinheit basierend auf der ermittelten Rezirkulationsrate die Brennstoffnutzung der Brennstoffzelleneinheit. Durch die erfindungsgemäße Ausgestaltung können/kann vorteilhaft einfach, vorteilhaft schnell und/oder vorteilhaft während eines Gebrauchs des Brennstoffzellensystems der Systemparameter, insbesondere die Rezirkulationsrate und/oder die Brennstoffnutzung der Brennstoffzelleneinheit, bestimmt werden.

Ferner wird vorgeschlagen, dass in zumindest einem Verfahrensschritt eine Brennstoffzufuhr und/oder eine Rezirkulationsdurchfluss des Brennstoffzellensystems in Abhängigkeit von dem ermittelten Systemparameter eingestellt werden/wird. Insbesondere sendet die Recheneinheit in zumindest einem Verfahrensschritt ein Steuersignal an die Steuereinheit des Brennstoffzellensystems, um zumindest einen, insbesondere einen der bereits genannten, Betriebsparameter des Brennstoffzellensystems einzustellen. Insbesondere ist das Steuersignal abhängig von dem ermittelten Systemparameter und/oder dem weiteren Systemparameter. Insbesondere passt die Recheneinheit über das Steuersignal einen Betriebszustand des Brennstoffzellensystems an eine Zusammensetzung des Brennstoffs, insbesondere an die Zusammensetzung des Brennstoffs bei Eintritt in das Brennstoffzellensystem, an. Besonders bevorzugt ist das Steuersignal dazu vorgesehen, die Brennstofffördereinheit und/oder die Rezirkulationsfördereinheit zu steuern, um einen Betriebszustand den Brennstoffzellensystems einzustellen. Durch die erfindungsgemäße Ausgestaltung kann das Brennstoffzellensystem vorteilhaft effizient betrieben werden.

Weiter wird vorgeschlagen, dass in zumindest einem Verfahrensschritt die Betriebscharakteristik des Brennstoffzellensystems mit einer Betriebscharakteristik zumindest eines weiteren Brennstoffzellensystems in Beziehung gesetzt wird. Vorzugsweise ist das Brennstoffzellensystem und das weitere Brennstoffzellensystem als Teil einer Brennstoffzellenanlage ausgebildet. Insbesondere sind das Brennstoffzellensystem und das weitere Brennstoffzellensystem bezüglich einer zentralen Brennstoffversorgung der Brennstoffzellenanlage parallel geschaltet. Besonders bevorzugt sind das Brennstoffzellensystem und das weitere Brennstoffzellensystem zumindest im Wesentlichen, insbesondere bis auf eine Fertigungstoleranz, baugleich ausgebildet. Vorzugsweise wird für jedes der Brennstoffzellensysteme eine entsprechende Betriebscharakteristik ausgewertet, insbesondere eine Leistungsbilanz erstellt und/oder ein Gleichungssystem aufgestellt. Insbesondere kann die Auswertung der Betriebscharakteristika parallel und/oder iterativ erfolgen. Die Betriebscharakteristika können insbesondere jeweils von den lokalen Recheneinheiten der Brennstoffzellensysteme und/oder von einer zentralen Recheneinheit der Brennstoffzellenanlage ausgewertet werden. Insbesondere werden die Betriebscharakteristika der Brennstoffzellensysteme in Abhängigkeit voneinander ausgewertet. Durch die erfindungsgemäße Ausgestaltung können die Betriebscharakteristika vorteilhaft viele unbekannte Betriebsparameter enthalten. Insbesondere kann die Betriebscharakteristik ausgewertet werden, auch wenn nur wenig Betriebsparameter zur Verfügung stehen. Insbesondere kann die Betriebscharakteristik mit vorteilhaft wenig Annahmen und/oder Schätzungen ausgewertet werden. Beispielsweise kann der Wärmefluss, insbesondere der Wärmeverlust, mittels eines Vergleichs der Betriebscharakteristika ermittelt werden, insbesondere anstelle einer Regressionsfunktion oder zu deren Korrektur. Beispielsweise kann zusätzlich ein Stickstoffgehalt des Brennstoffs und/oder des Oxidans als weitere Unbekannte in die Betriebscharakteristika aufgenommen werden.

Darüber hinaus wird ein Brennstoffzellensystem mit zumindest einer Recheneinheit zu einer Durchführung eines erfindungsgemäßen Verfahrens vorgeschlagen. Vorzugsweise umfasst das Brennstoffzellensystem zumindest die Brennstoffzelleneinheit. Vorzugsweise umfasst das Brennstoffzellensystem zumindest die Brennstoffleitung zu einem Transport des Brennstoffs zu der Brennstoffelektrode. Vorzugsweise umfasst das Brennstoffzellensystem zumindest die Brennstofffördereinheit. Vorzugsweise umfasst das Brennstoffzellensystem den Reformer. Vorzugsweise umfasst das Brennstoffzellensystem zumindest die Oxidansleitung zu einem Transport des Oxidans zu der Oxidanselektrode. Vorzugsweise umfasst das Brennstoffzellensystem eine Oxidansfördereinheit. Vorzugsweise umfasst das Brennstoffzellensystem zumindest den Wärmeübertrager, welcher insbesondere die Brennstoffleitung und die Oxidansleitung thermisch koppelt. Vorzugsweise umfasst das Brennstoffzellensystem zumindest eine Brennstoffabfuhrleitung, welche dazu vorgesehen ist, das aus der Brennstoffelektrode austretende Fluid abzuführen. Vorzugsweise umfasst das Brennstoffzellensystem zumindest eine Oxidansabfuhrleitung, welche dazu vorgesehen ist, das aus der Oxidanselektrode austretende Fluid abzuführen. Vorzugsweise umfasst das Brennstoffzellensystem den Nachbrenner. Vorzugsweise umfasst das Brennstoffzellensystem eine Abgasleitung, insbesondere zu einer Abfuhr des Abgases aus dem Nachbrenner. Vorzugsweise umfasst das Brennstoffzellensystem zumindest den Abgasoxidanswärmeübertrager, insbesondere zu einer thermischen Kopplung der Abgasleitung und der Oxidansleitung. Optional umfasst das Brennstoffzellensystem die Rezirkulationsleitung. Insbesondere führt die Rezirkulationsleitung von der Brennstoffabfuhrleitung zu der Brennstoffleitung. Vorzugsweise umfasst das Brennstoffzellensystem die Rezirkulationsfördereinheit zu einer Rezirkulation eines Anteils des aus der Brennstoffelektrode austretenden Fluids. Optional umfasst das Brennstoffzellensystem zumindest einen kalorimetrischen Durchflussmesser. Vorzugweise umfasst das Brennstoffzellensystem eine Temperatursensoreinheit, welche mehrere Temperatursensorelemente umfasst, von denen zumindest je eines beispielsweise stromaufwärts des Reformers, stromabwärts des Reformers, stromabwärts der Brennstoffelektrode, stromabwärts der Oxidanselektrode, stromaufwärts des Nachbrenners und/oder stromabwärts des Nachbrenners angeordnet sind. Vorzugsweise umfasst das Brennstoffzellensystem zumindest eine Steuereinheit zu einem Betrieb des Brennstoffzellensystems.

Insbesondere können die Recheneinheit und die Steuereinheit ineinander integriert, insbesondere mit gemeinsam genutzten Bauteilen, oder als eigenständige Module ausgebildet sein, welche insbesondere über eine leitungsgebundene oder drahtlose Datenschnittstelle verfügen. Durch die erfindungsgemäße Ausgestaltung kann ein überwachbares Brennstoffzellensystem mit vorteilhaft geringer Anzahl an Sensorelementen bereitgestellt werden. Insbesondere kann ein vorteilhaft kompaktes und/oder vorteilhaft kostengünstiges überwachbares Brennstoffzellensystem zur Verfügung gestellt werden.

Das erfindungsgemäße Verfahren und/oder das erfindungsgemäße Brennstoffzellensystem sollen/soll hierbei nicht auf die oben beschriebene Anwendung und Ausführungsform beschränkt sein. Insbesondere können/kann das erfindungsgemäße Verfahren und/oder das erfindungsgemäße Brennstoffzellensystem zu einer Erfüllung einer hierin beschriebenen Funktionsweise eine von einer hierin genannten Anzahl von einzelnen Elementen, Bauteilen und Einheiten sowie Verfahrensschritten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:

Fig. 1 eine schematische Darstellung eines erfindungsgemäßen Brennstoffzellensystems mit eingezeichneten Unterbaugruppen für eine Systemphase eines erfindungsgemäßen Verfahrens,

Fig. 2 eine schematische Darstellung des erfindungsgemäßen Brennstoffzellensystems mit eingezeichneten Unterbaugruppen für eine Teilsystemphase des erfindungsgemäßen Verfahrens,

Fig. 3 eine schematische Darstellung des erfindungsgemäßen Verfahrens,

Fig. 4 eine schematische Darstellung einer Betriebscharakteristik einer Brennstofffördereinheit des erfindungsgemäßen Brennstoffzellensystems,

Fig. 5 eine schematische Darstellung einer Ausgestaltung der Teilsystemphase,

Fig. 6 eine schematische Darstellung eines Zusammenhangs zwischen einer Kohlenstoffmenge und einem WasserstoffKohlenstoff-Verhältnis eines Brennstoffs für das Brennstoffzellensystem,

Fig. 7 eine schematische Darstellung eines Zusammenhangs zwischen einer potentiell zur Verfügung stehenden Elektronenanzahl und dem Wasserstoff-Kohlenstoff-Verhältnis des Brennstoffs,

Fig. 8 eine schematische Darstellung eines Zusammenhangs zwischen einer Dichte und dem Wasserstoff-Kohlenstoff-Verhältnis des Brennstoffs,

Fig. 9 eine schematische Darstellung eines Zusammenhangs zwischen einer molaren Wärmekapazität und dem WasserstoffKohlenstoff-Verhältnis des Brennstoffs und

Fig. 10 eine schematische Darstellung eines Zusammenhangs zwischen einer molaren Enthalpie und dem WasserstoffKohlenstoff-Verhältnis des Brennstoffs.

Beschreibung des Ausführungsbeispiels

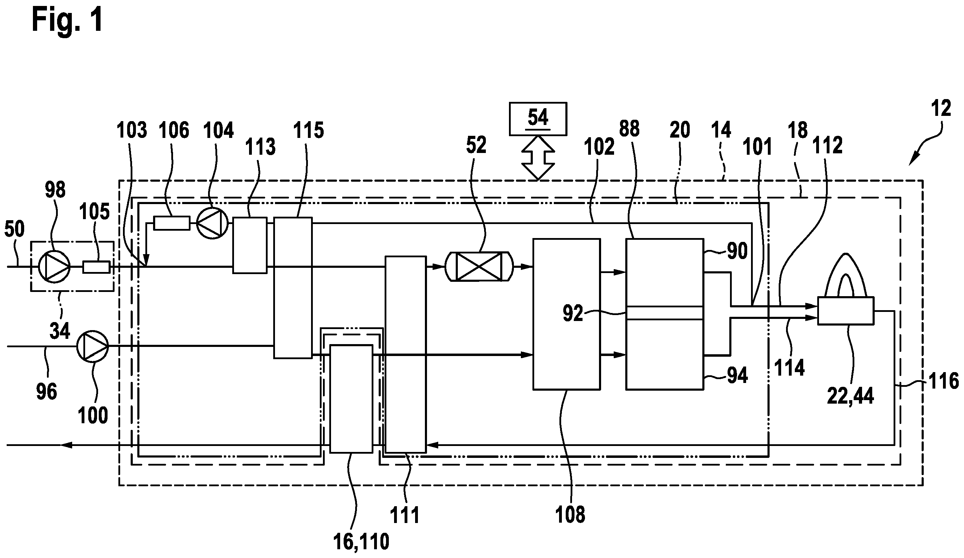

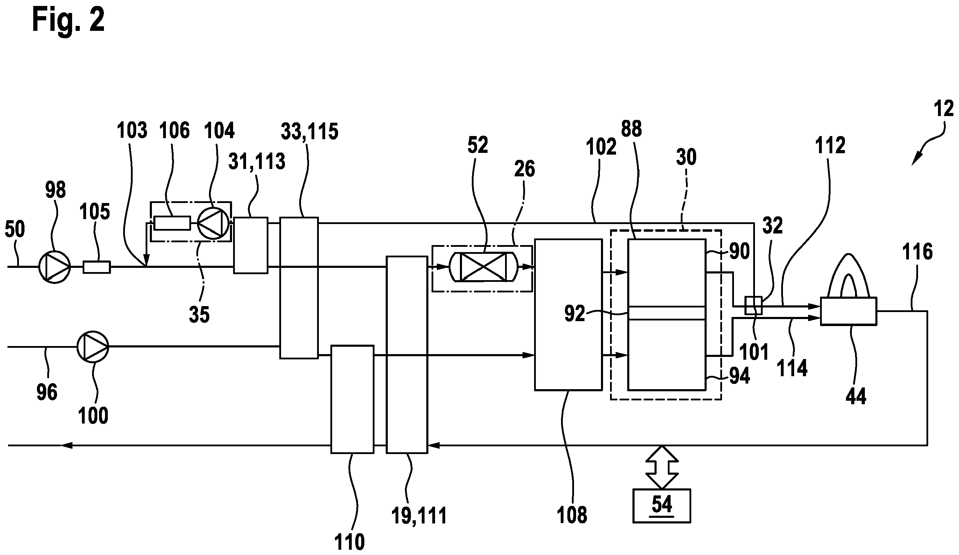

Figuren 1 und 2 zeigen ein Brennstoffzellensystem 12. Insbesondere ist das Brennstoffzellensystem 12 als Festoxidbrennstoffzellensystem ausgebildet. Das Brennstoffzellensystem 12 umfasst zumindest eine Brennstoffzelleneinheit 88, welche insbesondere zumindest eine Festoxidbrennstoffzelle, kurz SOFC, umfasst. Der Übersichtlichkeit halber ist die Brennstoffzelleneinheit 88 hier funktional als einzelne Brennstoffzelle dargestellt. Die Brennstoffzelleneinheit 88 umfasst zumindest eine Brennstoffelektrode 90. Die Brennstoffzelleneinheit 88 umfasst zumindest eine Oxidanselektrode 94. Die Brennstoffzelleneinheit 88 umfasst ein zwischen der Oxidanselektrode 94 und der Brennstoffelektrode 90 angeordnetes Elektrolyt 92. Das Brennstoffzellensystem 12 umfasst vorzugsweise zumindest eine Brennstoffleitung 50, insbesondere von einer Brennstoffversorgung zu der Brennstoffzelleneinheit 88. Bevorzugt ist die Brennstoffleitung 50 zu einem Transport eines Brennstoffs, insbesondere zu der zumindest einen Brennstoffelektrode 90, vorgesehen. Das Brennstoffzellensystem 12 umfasst vorzugsweise zumindest eine Brennstofffördereinheit 98, welche insbesondere in der Brennstoffleitung 50 angeordnet ist, insbesondere zu einer Förderung des Brennstoffs zu der Brennstoffzelleneinheit 88. Beispielsweise ist die Brennstofffördereinheit 98 als Kompressor, als Ventilator, als Pumpe oder dergleichen ausgebildet. Vorzugsweise umfasst das Brennstoffzellensystem 12 einen Reformer 52. Bevorzugt ist der Reformer 52 in der Brennstoffleitung 50 zwischen der Brennstoffzelleneinheit 88 und der Brennstofffördereinheit 98 angeordnet. Der Reformer 52 ist insbesondere zu einer Erzeugung eines reformierten Brennstoffs stromaufwärts der Brennstoffzelleneinheit 88 vorgesehen. Vorzugsweise umfasst das Brennstoffzellensystem 12 zumindest eine Oxidansleitung 96, insbesondere von einer Oxidansversorgung zu der Brennstoffzelleneinheit 88. Die Oxidansleitung 96 ist vorzugsweise zu einem Transport eines Oxidans, insbesondere zu der zumindest einen Oxidanselektrode 94 der Brennstoffzelleneinheit 88, vorgesehen. Vorzugsweise umfasst das Brennstoffzellensystem 12 eine Oxidansfördereinheit 100, welche insbesondere in der Oxidansleitung 96 angeordnet ist, insbesondere zu einer Förderung des Oxidans zu der Oxidanselektrode 94. Beispielsweise ist die Oxidansfördereinheit 100 als Kompressor, als Ventilator, als Pumpe oder dergleichen ausgebildet. Bevorzugt umfasst das Brennstoffzellensystem 12 zumindest einen Ausgleichswärmeübertrager 108, welcher insbesondere die Brennstoffleitung 50 und die Oxidansleitung 96 thermisch koppelt. Vorzugsweise ist der Ausgleichswärmeübertrager 108 in der Brennstoffleitung 50 zwischen der Brennstoffzelleneinheit 88 und dem Reformer 52 angeordnet. Insbesondere ist der Ausgleichswärmeübertrager 108 in der Oxidansleitung 96 zwischen der Brennstoffzelleneinheit 88 und der Oxidansfördereinheit 100 angeordnet.

Vorzugsweise umfasst das Brennstoffzellensystem 12 zumindest eine Brennstoffabfuhrleitung 112, welche an der Brennstoffzelleneinheit 88, insbesondere an der Brennstoffelektrode 90, angeschlossen ist und insbesondere dazu vorgesehen ist, das aus der Brennstoffelektrode 90 austretende Fluid abzuführen. Vorzugsweise umfasst das Brennstoffzellensystem 12 zumindest eine Oxidansabfuhrleitung 114, welche an der Brennstoffzelleneinheit 88, insbesondere an der Oxidanselektrode 94, angeschlossen ist und insbesondere dazu vorgesehen ist, das aus der Oxidanselektrode 94 austretende Fluid abzuführen. Bevorzugt umfasst das Brennstoffzellensystem 12 einen Nachbrenner 44. Vorzugsweise führen die Brennstoffabfuhrleitung 112 und die Oxidansabfuhrleitung 114 von der Brennstoffzelleneinheit 88 in den Nachbrenner 44. Vorzugsweise umfasst das Brennstoffzellensystem 12 eine Abgasleitung 116, insbesondere zu einer Abfuhr eines Abgases aus dem Nachbrenner 44. Vorzugweise umfasst das Brennstoffzellensystem 12 eine Temperatursensoreinheit (hier nicht dargestellt).

Optional umfasst das Brennstoffzellensystem 12 zumindest einen Abgasoxidanswärmeübertrager 110, insbesondere zu einer thermischen Kopplung der Abgasleitung 116 und der Oxidansleitung 96. Bevorzugt ist der Abgasoxidanswärmeübertrager 110 stromabwärts des Nachbrenners 44 angeordnet. Vorzugsweise ist der Abgasoxidanswärmeübertrager 110 in der Oxidansleitung 96 zwischen dem Ausgleichswärmeübertrager 108 und der Oxidansfördereinheit 100 angeordnet. Optional umfasst das Brennstoffzellensystem 12 zumindest einen Abgasbrennstoffwärmeübertrager 111, insbesondere zu einer thermischen Kopplung der Abgasleitung 116 und der Brennstoffleitung 50. Bevorzugt ist der Abgasbrennstoffwärmeübertrager 111 stromabwärts des Nachbrenners 44 angeordnet und insbesondere stromaufwärts des Abgasoxidanswärmeübertragers 110. Vorzugsweise ist der Abgasbrennstoffwärmeübertrager 111 in der Brennstoffleitung 50 zwischen dem Reformer 52 und der Brennstofffördereinheit 98 angeordnet.

Optional umfasst das Brennstoffzellensystem 12 eine Rezirkulationsleitung 102. Insbesondere führt die Rezirkulationsleitung 102 von der Brennstoffabfuhrleitung 112 zu der Brennstoffleitung 50. Vorzugsweise ist eine Einspeisestelle 103 der Rezirkulationsleitung 102 in die Brennstoffleitung 50 zwischen der Brennstofffördereinheit 98 und dem Reformer 52 angeordnet. Vorzugsweise ist eine Entnahmestelle 101 der Rezirkulationsleitung 102 in der Brennstoffabfuhrleitung 112 zwischen der Brennstoffzelleneinheit 88 und dem Nachbrenner 44 angeordnet. Vorzugsweise umfasst das Brennstoffzellensystem 12 eine Rezirkulationsfördereinheit 104, welche insbesondere in der Rezirkulationsleitung 102 angeordnet ist, insbesondere zu einer Rezirkulation eines Anteils des aus der Brennstoffelektrode 90 austretenden Fluids. Vorzugsweise ist die Rezirkulationsfördereinheit 104 als Kompressor, als Ventilator, als Pumpe oder dergleichen ausgebildet. Optional umfasst das Brennstoffzellensystem 12 einen kalorimetrischen Durchflussmesser 105, welcher insbesondere in der Brennstoffleitung 50 angeordnet ist. Optional umfasst das Brennstoffzellensystem 12 einen weiteren kalorimetrischen Durchflussmesser 106, welcher insbesondere in der Rezirkulationsleitung 102 angeordnet ist, insbesondere stromaufwärts oder stromabwärts der Rezirkulationsfördereinheit 104. Bevorzugt umfasst das Brennstoffzellensystem 12 zumindest einen Rezirkulationsbrennstoffwärmeübertrager 113, welcher insbesondere die Brennstoffleitung 50 und die Rezirkulationsleitung 102 thermisch koppelt. Vorzugsweise ist der Rezirkulationsbrennstoffwärmeübertrager 113 in der Brennstoffleitung 50 zwischen der Brennstofffördereinheit 98 und der Brennstoffzelleneinheit 88 angeordnet, hier insbesondere stromaufwärts oder alternativ stromabwärts des Abgasbrennstoffwärmeübertragers 111. Insbesondere ist der Rezirkulationsbrennstoffwärmeübertrager 113 in der Rezirkulationsleitung 102 stromaufwärts der Rezirkulationsfördereinheit 104 des Brennstoffzellensystems 12 angeordnet. Bevorzugt umfasst das Brennstoffzellensystem 12 zumindest einen Rezirkulationsoxidanswärmeübertrager 115, welcher insbesondere die Rezirkulationsleitung 102 und die Oxidansleitung 96 thermisch koppelt. Vorzugsweise ist der Rezirkulationsoxidanswärmeübertrager 115 in der Rezirkulationsleitung 102 stromaufwärts der Rezirkulationsfördereinheit 104 angeordnet. Insbesondere ist der Rezirkulationsoxidanswärmeübertrager 115 in der Oxidansleitung 96 zwischen der Brennstoffzelleneinheit 88 und der Oxidansfördereinheit 100 angeordnet, hier insbesondere stromaufwärts des Abgasoxidanswärmeübertragers 110 oder alternativ stromabwärts des Abgasoxidanswärmeübertragers 110. Insbesondere bildet die Rezirkulationsleitung 102 zusammen mit der Brennstoffleitung 50 und der Brennstoffabfuhrleitung 112 eine Leitungsschleife, in welcher insbesondere die Brennstoffzelleneinheit 88, der Ausgleichswärmeübertrager 108, der Rezirkulationsbrennstoffwärmeübertrager 113, der Rezirkulationsoxidanswärmeübertrager 115, der Abgasbrennstoffwärmeübertrager 111, die Rezirkulationsfördereinheit 104 und/oder der Reformer 52 angeordnet sind. Insbesondere sind die Brennstofffördereinheit 98, die Oxidansfördereinheit 100, der Nachbrenner 44 und/oder der Abgasoxidanswärmeübertrager 110 außerhalb der Leitungsschlaufe angeordnet.

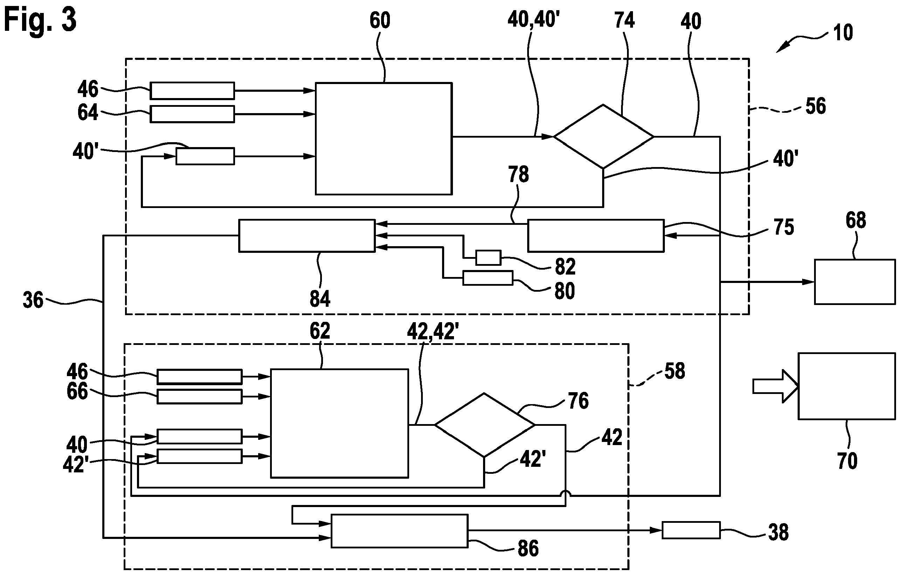

Das Brennstoffzellensystem 12 umfasst zumindest eine Recheneinheit 54. Die Recheneinheit 54 ist zu einer Durchführung eines Verfahrens 10 vorgesehen, welches insbesondere in Figur 3 näher erläutert wird. Das Verfahren 10 ist zur Überwachung des Brennstoffzellensystems 12 vorgesehen. Die Recheneinheit 54 unterteilt das Brennstoffzellensystem 12 in mehrere Unterbaugruppen 14, 16, 18, 20, 22, 34 (siehe Figur 1) und 19, 24, 26, 28, 30, 31, 32, 33, 35 (siehe Figur 2). Insbesondere ordnet die Recheneinheit 54 Bauteile des Brennstoffzellensystems 12 den Unterbaugruppen 14, 16, 18, 19, 20, 22, 24, 26, 28, 30, 31, 32, 33 34, 35 zu.

Figur 3 zeigt das Verfahren 10 zur Überwachung des Brennstoffzellensystems 12. In zumindest einem Verfahrensschritt wird ein charakteristischer Systemparameter des Brennstoffzellensystems 12 ermittelt. In zumindest einem Verfahrensschritt wird eine Betriebscharakteristik zumindest einer der Unterbaugruppen 14, 16, 18, 19, 20, 22, 24, 26, 28, 30, 31, 32, 33 34, 35 des Brennstoffzellensystems 12 zur Implementierung eines Softsensors für den Systemparameter verwendet. In zumindest einem Verfahrensschritt wird eine Betriebscharakteristik zumindest einer der Unterbaugruppen 14, 16, 18, 19, 20, 22, 24, 26, 28, 30, 31, 32, 33 34, 35 des Brennstoffzellensystems 12 zur Implementierung eines Softsensors für einen weiteren Systemparameter des Brennstoffzellensystems 12 verwendet, wobei einer der ermittelten Systemparameter zur Ermittlung des anderen verarbeitet wird. Vorzugsweise umfasst das Verfahren 10 zwei Phasen. Insbesondere umfasst das Verfahren 10 eine Systemphase 56. Insbesondere ermittelt die Recheneinheit 54 in der Systemphase 56 als Systemparameter eine Brennstoffkenngröße 40. Insbesondere ermittelt die Recheneinheit 54 in der Systemphase 56 als Systemparameter eine Brennstoffnutzung 36 des Brennstoffzellensystems 12, insbesondere abhängig von der Brennstoffkenngröße 40. Vorzugsweise umfasst das Verfahren 10 eine Teilsystemphase 58. Insbesondere ermittelt die Recheneinheit 54 in der Teilsystemphase 58 als Systemparameter eine Rezirkulationsrate 42 des Brennstoffzellensystems 12. Insbesondere ermittelt die Recheneinheit 54 in der Teilsystemphase 58 als Systemparameter eine Brennstoffnutzung 38 der Brennstoffzelleneinheit 88, insbesondere in Abhängigkeit von der Rezirkulationsrate 42. Insbesondere anwendungsabhängig kann das Verfahren 10 mit nur einer der Phasen ausgestaltet werden. Beispielsweise kann die Systemphase 56 entfallen, wenn eine Zusammensetzung des Brennstoffs, insbesondere die Brennstoffkenngröße 40, bekannt ist. Beispielsweise kann die Teilsystemphase 58 entfallen, wenn ein Brennstoffzellensystem ohne Rezirkulationsleitung überwacht wird. Insbesondere umfasst das Verfahren 10, insbesondere die Systemphase 56, einen Brennstoffanalyseschritt 60, in welchem die Recheneinheit 54 die Brennstoffkenngröße 40 ermittelt. Insbesondere umfasst das Verfahren 10, insbesondere die Systemphase 56, eine Brennstoffnutzungsermittlung 84 des Verfahrens 10, in welcher die Recheneinheit 54 die Brennstoffnutzung 36 des Brennstoffzellensystems 12 ermittelt, insbesondere in Abhängigkeit von der Brennstoffkenngröße 40. Insbesondere umfasst das Verfahren 10, insbesondere die Teilsystemphase 58, einen Rezirkulationsermittlungsschritt 62, in welchem die Recheneinheit 54 die Rezirkulationsrate 42 ermittelt, insbesondere in Abhängigkeit von der Brennstoffkenngröße 40. Insbesondere umfasst das Verfahren 10 eine weitere Brennstoffnutzungsermittlung 86, in welcher die Recheneinheit 54 die Brennstoffnutzung 38 der Brennstoffzelleneinheit 88 ermittelt, insbesondere in Abhängigkeit von der Rezirkulationsrate 42 und/oder der Brennstoffnutzung 36 des Brennstoffzellensystems 12. Insbesondere nutzt die Recheneinheit 54 die Betriebscharakteristik in dem Brennstoffanalyseschritt 60 und/oder in dem Rezirkulationsermittlungsschritt 62.

Insbesondere wählt die Recheneinheit 54 in der Systemphase 56, insbesondere in dem Brennstoffanalyseschritt 60, eine der Unterbaugruppen 14, 18, 20, welche die Leitungsschlaufe vollständig umfassen, oder eine der Unterbaugruppen 16, 22, 34 welche die Leitungsschlaufe vollständig ausschließen (vgl. Figur 1), um den Systemparameter zu ermitteln. Beispielsweise umfasst die als Brennergruppe ausgebildete Unterbaugruppe 22, insbesondere ausschließlich, den Nachbrenner 44. Beispielsweise umfasst die als Rezirkulationsgruppe ausgebildete Unterbaugruppe 20, insbesondere ausschließlich, die Leitungsschlaufe. Beispielsweise umfasst die als Rezirkulationsbrennergruppe ausgebildete Unterbaugruppe 18, den Nachbrenner 44 und die Leitungsschlaufe. Beispielsweise umfasst die als Systemgruppe ausgebildete Unterbaugruppe 14 den Nachbrenner 44, die Leitungsschlaufe und den Abgasoxidanswärmeübertrager 110. Beispielsweise umfasst die als Abgasgruppe ausgebildete Unterbaugruppe 16, insbesondere ausschließlich den Abgasoxidanswärmeübertrager 110. Beispielsweise umfasst die als Fördergruppe ausgebildete Unterbaugruppe 34, die Brennstofffördereinheit 98 und den kalorimetrischen Durchflussmesser 105.

Insbesondere wählt die Recheneinheit 54 in der Teilsystemphase 58, insbesondere in dem Rezirkulationsermittlungsschritt 62, eine oder eine Kombination der Unterbaugruppen 19, 24, 26, 28, 30, 31, 32, 33, 35, welche die Leitungsschlaufe, insbesondere zumindest und/oder höchstens, teilweise umfasst (vgl. Figur 2), um den Systemparameter zu ermitteln. Beispielsweise umfasst die als Brennstoffzellengruppe ausgebildete Unterbaugruppe 30, insbesondere ausschließlich, die Brennstoffzelleneinheit 88. Beispielsweise umfasst die als Übertragergruppe ausgebildete Unterbaugruppe 28, insbesondere ausschließlich, den Ausgleichswärmeübertrager 108. Beispielsweise umfasst die als Abgasbrennstoffübertragergruppe ausgebildete Unterbaugruppe 19, insbesondere ausschließlich, den Abgasbrennstoffwärmeübertrager 111. Beispielsweise umfasst die als Rezirkulationsbrennstoffübertragergruppe ausgebildete Unterbaugruppe 31, insbesondere ausschließlich, den Rezirkulationsbrennstoffwärmeübertrager 113. Beispielsweise umfasst die als Rezirkulationsoxidansbrennstoffübertragergruppe ausgebildete Unterbaugruppe 33, insbesondere ausschließlich, den Rezirkulationsoxidanswärmeübertrager 115. Beispielsweise umfasst die als Reformergruppe ausgebildete Unterbaugruppe 26, insbesondere ausschließlich, den Reformer 52. Beispielsweise umfasst die als weitere Fördergruppe ausgebildete Unterbaugruppe 35 die Rezirkulationsfördereinheit 104 und den weiteren kalorimetrischen Durchflussmesser 106. Beispielsweise umfasst die als Einspeisegruppe ausgebildete Unterbaugruppe 24, insbesondere ausschließlich, die Einspeisestelle 103. Beispielsweise umfasst die als Entnahmegruppe ausgebildete Unterbaugruppe 32, insbesondere ausschließlich, die Entnahmestelle 101.

Vorzugweise umfasst das Verfahren 10 einen Kalibrierungsschritt 46. In dem Kalibrierungsschritt 46 ermittelt die Recheneinheit 54 oder eine externe, insbesondere werksseitige und/oder wartungstechnische, Recheneinheit die Betriebscharakteristik einer der Unterbaugruppen 14, 16, 18, 19, 20, 22, 24, 26, 28, 30, 31, 32, 33, 34, 35. Insbesondere wird die Betriebscharakteristik in dem Kalibrierungsschritt 46 in dem Speicher der Recheneinheit 54 hinterlegt. Insbesondere ruft die Recheneinheit 54 die Betriebscharakteristik in dem Brennstoffanalyseschritt 60 und/oder den Rezirkulationsermittlungsschritt 62 aus dem Speicher der Recheneinheit 54 ab. Vorzugsweise umfasst das Verfahren 10, insbesondere die Systemphase 56, zumindest einen Abfrageschritt 64, in welchem die Recheneinheit 54 zur Verfügung stehende Betriebsparameter, insbesondere von einer Steuereinheit des Brennstoffzellensystems 12, von einem Sensorelement des Brennstoffzellensystems 12 und/oder einer Funktionseinheit des Brennstoffzellensystems 12, abfragt, insbesondere zu einer Verwendung in dem Brennstoffanalyseschritt 60.

Vorzugsweise ermittelt die Recheneinheit 54 in dem Brennstoffanalyseschritt 60 die Brennstoffkenngröße 40 numerisch, insbesondere iterativ. Insbesondere überprüft die Recheneinheit 54 in zumindest einem Konvergenztest 74 des Verfahrens 10, ob ein aktueller Wert der Brennstoffkenngröße 40’ ein Konvergenzkriterium, beispielsweise wenn eine Abweichung von einer vorherigen Iteration kleiner als ein Grenzwert ist, erfüllt. Insbesondere wenn der aktuelle Wert der Brennstoffkenngröße 40’ das Konvergenzkriterium erfüllt, wird der aktuelle Wert der Brennstoffkenngröße 40’ als Brennstoffkenngröße 40 übernommen. Insbesondere wenn der aktuelle Wert der Brennstoffkenngröße 40’ das Konvergenzkriterium nicht erfüllt, wird der Brennstoffanalyseschritt 60 mit dem aktuellen Wert der Brennstoffkenngröße 40’ als neuer Startwert wiederholt.

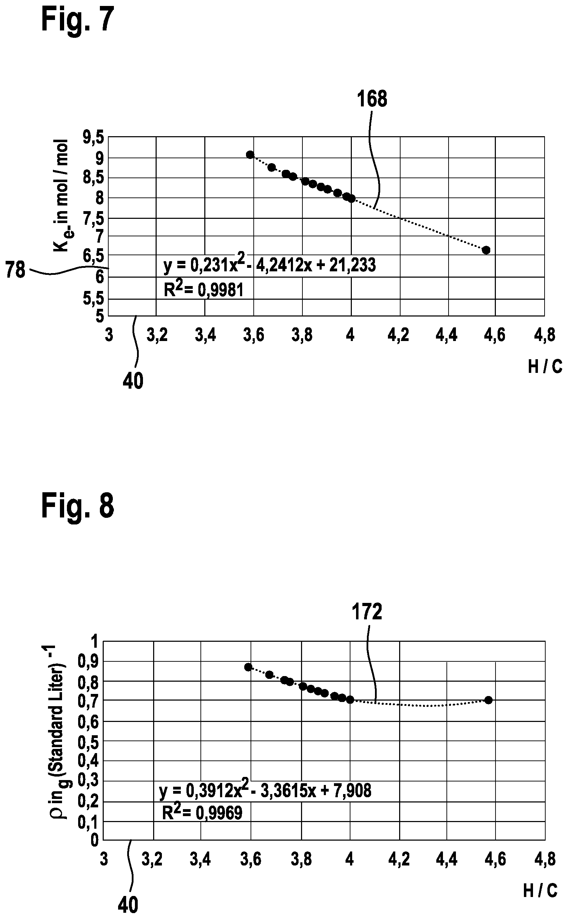

Vorzugsweise beschreibt die Brennstoffkenngröße 40 eine Verwertbarkeit des Brennstoffs mittels des Brennstoffzellensystems 12. Beispielsweise ist die Brennstoffkenngröße 40 als Wasserstoff-Kohlenstoffverhältnis $H/C$ des Brennstoffs ausgebildet. Alternativ ist die Brennstoffkenngröße 40 als potentiell für eine Umsetzung zur Verfügung stehende Elektronenanzahl $K_{e-}$, insbesondere in Mol pro Mol Brennstoff, ausgebildet. Optional umfasst das Verfahren 10, insbesondere die Systemphase 56, einen Konvertierungsschritt 75. Insbesondere ermittelt die Recheneinheit 54 in dem Konvertierungsschritt 75 aus der Brennstoffkenngröße 40, insbesondere aus dem Wasserstoff-Kohlenstoffverhältnis $H/C$ und/oder einer äquivalenten Größe, eine weitere Brennstoffkenngröße 78, insbesondere die potentielle Elektronenanzahl $K_{e-}$. Insbesondere entfällt der Konvertierungsschritt 75, wenn in dem Brennstoffanalyseschritt 60 als Brennstoffkenngröße 40 bereits die weitere Brennstoffkenngröße 78 ermittelt wird. Vorzugsweise führt die Recheneinheit 54 den Konvertierungsschritt 75 aus, indem sie eine Regressionsfunktion 168 für die weitere Brennstoffkenngröße 78 in Abhängigkeit von der Brennstoffkenngröße 40 auswertet (vgl. Figur 7).

Vorzugsweise ermittelt die Recheneinheit 54 die Brennstoffnutzung 36 des Brennstoffzellensystems 12 ($FU_{sys}$) analytisch, insbesondere anhand von

$$FU_{sys} = (i_{einh} * n_c * u * V_m)/(\dot{V}_{bs,sys\,in} * K_{e-}),$$

insbesondere in Abhängigkeit von einer von der Brennstoffzelleneinheit 88 abgegriffenen elektrischen Stromstärke $i_{einh}$, von einer Anzahl an Brennstoffzellen $n_c$ innerhalb der Brennstoffzelleneinheit 88, von einem Eingangsvolumenstrom $\dot{V}_{bs,sys\,in}$ des Brennstoffs bei Eintritt in das Brennstoffzellensystem 12 und von der potentiellen Elektronenanzahl $K_{e-}$, wobei $V_m$ das molare Volumen bei Normbedingung bezeichnet. Insbesondere bezeichnet u einen optionalen Umrechnungsfaktor, insbesondere ist $u = 60$ für einen Volumenstrom typischerweise gegeben in Standardliter pro Minute und eine molaren Flussrate typischerweise gegeben in Mol pro Sekunde. Insbesondere fragt die Recheneinheit 54 die Stromstärke $i_{einh}$ in einem Stromermittlungsschritt 82 des Verfahrens 10 von der Steuereinheit des Brennstoffzellensystems 12 ab. Alternativ wurde die Stromstärke $i_{einh}$ bereits im Abfrageschritt 64 von der Recheneinheit 54 abgefragt. Insbesondere fragt die Recheneinheit 54 den Eingangsvolumenstrom $\dot{V}_{bs,sys\,in}$ des Brennstoffs in einem Volumenstromermittlungsschritt 80 des Verfahrens 10 von der Steuereinheit des Brennstoffzellensystems 12 ab. Alternativ wurde der Eingangsvolumenstrom $\dot{V}_{bs,sys\,in}$ bereits in dem Abfrageschritt 64 von der Recheneinheit 54 abgefragt. Alternativ berechnet die Recheneinheit 54 den Eingangsvolumenstrom $\dot{V}_{bs,sys\,in}$ im Zuge des Brennstoffanalyseschritts 60. Insbesondere verwertet die Recheneinheit 54 die Brennstoffnutzung 36 des Brennstoffzellensystems 12, die Brennstoffkenngröße 40 und/oder die weitere Brennstoffkenngröße 78 in der Teilsystemphase 58.

Vorzugsweise umfasst das Verfahren 10, insbesondere die Teilsystemphase 58, zumindest einen weiteren Abfrageschritt 66, in welchem die Recheneinheit 54 zur Verfügung stehende Betriebsparameter, insbesondere von einer Steuereinheit des Brennstoffzellensystems 12, von einem Sensorelement des Brennstoffzellensystems 12 und/oder einer Funktionseinheit des Brennstoffzellensystems 12, abfragt, insbesondere zu einer Verwendung in dem Rezirkulationsermittlungsschritt 62. Insbesondere kann der weitere Abfrageschritt 66 gleichzeitig, überlappend oder zeitlich beabstandet mit dem Abfrageschritt 64 erfolgen.

Vorzugsweise ermittelt die Recheneinheit 54 in dem Rezirkulationsermittlungsschritt 62 die Rezirkulationsrate 42 numerisch, insbesondere iterativ. Insbesondere überprüft die Recheneinheit 54 in zumindest einem weiteren Konvergenztest 76, ob ein aktueller Wert der Rezirkulationsrate 42' ein Konvergenzkriterium, beispielsweise wenn eine Abweichung von einer vorherigen Iteration kleiner als ein Grenzwert ist, erfüllt. Insbesondere wenn der aktuelle Wert der Rezirkulationsrate 42' das Konvergenzkriterium erfüllt, wird der aktuelle Wert der Rezirkulationsrate 42' als Rezirkulationsrate 42 übernommen. Insbesondere wenn der aktuelle Wert der Rezirkulationsrate 42' das Konvergenzkriterium nicht erfüllt, wird der Rezirkulationsermittlungsschritt 62 mit dem aktuellen Wert der Rezirkulationsrate 42' als neuer Startwert wiederholt.

Insbesondere berechnet die Recheneinheit 54 in der weiteren Brennstoffnutzungsermittlung 86, insbesondere in der Teilsystemphase 58, die Brennstoffnutzung 38 der Brennstoffzelleneinheit 88 ($FU_{einh}$) in Abhängigkeit von der Brennstoffnutzung 36 des Brennstoffzellensystems 12 ($FU_{sys}$), insbesondere gemäß

$$FU_{einh} = (FU_{sys} * (1 - r))/(1 - r * FU_{sys}).$$

Insbesondere bezeichnet r die Rezirkulationsrate 42.

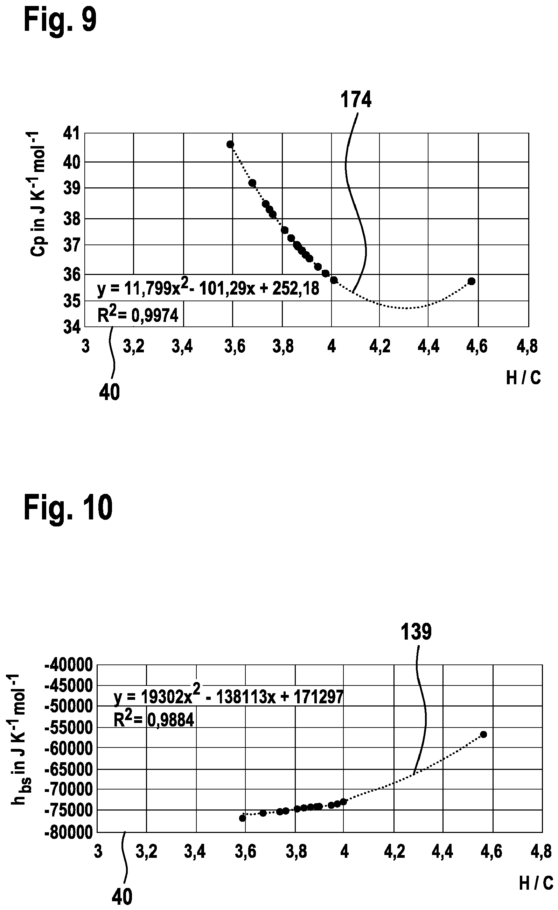

Vorzugsweise umfasst das Verfahren 10 einen Regelschritt 70. In dem Regelschritt 70 werden/wird eine Brennstoffzufuhr und/oder ein Rezirkulationsdurchfluss des Brennstoffzellensystems 12 in Abhängigkeit von dem ermittelten Systemparameter, insbesondere den Systemparametern, eingestellt. Insbesondere wird in dem Regelschritt 70 die Rezirkulationsrate 42, die elektrischen Stromstärke $i_{einh}$ der Brennstoffzelleneinheit 88 und/oder eine elektrischen Spannung der Brennstoffzelleneinheit 88 eingestellt, insbesondere geregelt. Optional umfasst das Verfahren 10 einen weiteren Analyseschritt 68. Insbesondere wertet die Recheneinheit 54 in dem weiteren Analyseschritt 68 den ermittelten Systemparameter, insbesondere die Brennstoffkenngröße 40, aus, um weitere Betriebsparameter und/oder Kenngrößen zu ermitteln, eine Dichte $\rho$ des Brennstoffs (vgl. Figur 8) und/oder eine molare Wärmekapazität $C_p$ des Brennstoffs (vgl. Figur 9). Insbesondere kann der weitere Analyseschritt 68 parallel zu dem Regelschritt 70, beispielsweise zu einer Wartung, Fehlerdiagnose oder dergleichen, durchgeführt werden oder in den Brennstoffanalyseschritt 60 und/oder den Rezirkulationsermittlungsschritt 62 integriert sein, insbesondere zu einer Ermittlung des Systemparameters. Beispielsweise korrigiert die Recheneinheit 54 mittels der molaren Wärmekapazität $C_p$ des Brennstoffs eine Messung des Eingangsvolumenstroms $\dot{V}_{bs,sys\,in}$ des Brennstoffs mittels des kalorischen Durchflussmessers 105.

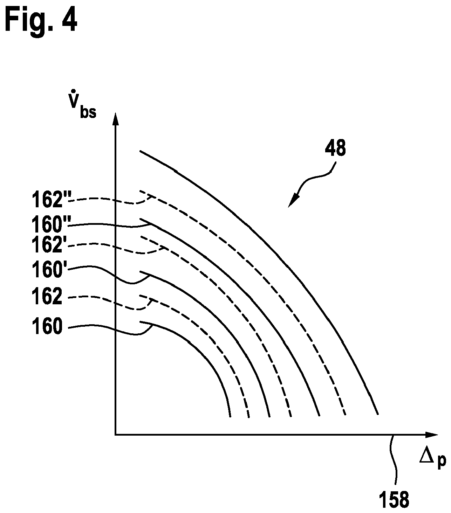

In dem Brennstoffanalyseschritt 60 wird mittels der Betriebscharakteristik eine Leistungsbilanz zumindest einer der Unterbaugruppen 14, 16, 18, 20, 22 erstellt. Zusätzlich oder alternativ wird in dem Brennstoffanalyseschritt 60 als Betriebscharakteristik zumindest eine Kennlinie 48 (siehe Figur 4) einer der Unterbaugruppen 34 ausgewertet, welche einen Einfluss auf einen Durchfluss eines Betriebsstoffs, insbesondere den Brennstoff, des Brennstoffzellensystems 12 aufweist. Im Folgenden wird als Beispiel die Leistungsbilanz der Brennergruppe näher erläutert, wobei insbesondere jede der Unterbaugruppen 14, 16, 18, 20, 22 für die Systemphase 56 analog auswertbar ist. Die Recheneinheit 54 erstellt die Leistungsbilanz für eine der Unterbaugruppen 22, welche den Nachbrenner 44 des Brennstoffzellensystems 12 umfasst. Beispielsweise stellt die Recheneinheit 54 bei der Brennergruppe die Leistungsbilanz

$$\dot{Q}_{nb} = \dot{H}_{bs,nb\,ein} + \dot{H}_{ox,nb\,ein} - \dot{H}_{ab,nb\,aus}$$

zumindest aus einem von dem Brennstoff getragenen Enthalpiezufluss $\dot{H}_{be,nb\,ein}$, einen von dem Oxidans getragenen Enthalpiezufluss $\dot{H}_{ox,nb\,ein}$, den aus dem Nachbrenner 44 über das Abgas austretenden leitungsgebundenen Enthalpieabfluss $\dot{H}_{ab,nb\,aus}$ und einen Wärmefluss $\dot{Q}_{nb}$, insbesondere Wärmeverlust, des Nachbrenners 44 zusammen.

Vorzugsweise ist in dem Speicher der Recheneinheit 54 ein Ausdruck $f_1$ hinterlegt, welcher den vom Brennstoff getragenen Enthalpiezufluss $\dot{H}_{bs,nb\,ein}$ zu dem Nachbrenner 44, insbesondere ausschließlich, als Funktion von der Brennstoffkenngröße 40, der Stromstärke $i_{einh}$, dem Eingangsvolumenstrom $\dot{V}_{bs,sys\,in}$ des Brennstoffs, eine Oxidansaustrittstemperatur $t_{ox,oe\ aus}$ des aus der Oxidanselektrode 94 austretenden Fluids, eine Brennereingangstemperatur $t_{bs,nb\ ein}$ des von der Brennstoffelektrode 90 kommenden und in den Nachbrenner 44 eintretenden Fluids ausdrückt. Insbesondere gilt:

$$\dot{H}_{bs,nb\ ein} = \dot{n}_{bs,nb\ ein} * \sum_i h_i\left(t_{bs,nb\ ein}\right) * x_{i,bs,nb\ ein},$$

mit einer molaren Flussrate $\dot{n}_{bs,nb\ ein}$ des von der Brennstoffelektrode 90 in den Nachbrenner 44 strömenden Fluids und mit molaren Enthalpieanteilen $h_i$ und molaren Konzentrationen $x_{i,bs,nb\ ein}$ von Bestandteilen dieses Fluids bei Eintritt in den Nachbrenner 44. Vorzugsweise werden in dem Kalibrierungsschritt 46 in dem Speicher der Recheneinheit 54 lineare Regressionsfunktionen für die molaren Enthalpieanteile $h_i$ der Form $h_i = a_i * t_{bs,nb\ ein} + b_i$ hinterlegt, wobei $a_i$ und $b_i$ bestandteilspezifische Parameter sind. Vorzugsweise weisen die linearen Regressionsfunktionen für die molaren Enthalpieanteile $h_i$ in einem vorgesehenen Temperaturbereich für den Nachbrenner 44 während eines Betriebs des Nachbrenners 44, beispielsweise zwischen 500°C und 700°C, bevorzugt zwischen 580°C und 620°C, ein Bestimmtheitsmaß von mehr als 99,9998% auf.

Insbesondere wird in dem Kalibrierungsschritt 46 eine Regressionsfunktion für die molaren Konzentrationen $x_{i,bs,nb\ ein}$ in dem Speicher der Recheneinheit 54 hinterlegt, welche insbesondere Minima der Gibbs-Energie in Abhängigkeit von der Oxidansaustrittstemperatur $t_{ox,oe\ aus}$, einem Sauerstoff-Kohlenstoffverhältnis $O/C_{be}$ des aus der Brennstoffelektrode 90 austretenden Fluids und von der Brennstoffkenngröße 40 wiedergibt. Insbesondere liegt der Regressionsfunktion für die molaren Konzentrationen $x_{i,bs,nb\ ein}$ die Annahme zu Grunde, dass der, insbesondere reformierte, Brennstoff, insbesondere ausschließlich, Methan $CH_4$, Kohlenstoffmonoxid $CO$, Kohlenstoffdioxid $CO_2$, Wasserstoff $H_2$ und/oder Wasser $H_2O$ und insbesondere keine Stoffe, die mehr als ein Kohlenstoffatom pro Molekül aufweisen, umfasst. Insbesondere nimmt der Index i des Enthalpiezuflusses $\dot{H}_{bs,nb\ ein}$ zu dem Nachbrenner 44 die Werte $CH_4$, $CO$, $CO_2$, $H_2$ und/oder $H_2O$ an. Insbesondere liegt der Regressionsfunktion für die molaren Konzentrationen $x_{i,bs,nb\ ein}$ die Annahme zu Grunde, dass sich das die Brennstoffelektrode 90 verlassende Fluid in einem chemischen Gleichgewicht befindet. Insbesondere hängt die Regressionsfunktion für die molaren Konzentrationen $x_{i,bs,nb\ ein}$ von der Oxidansaustrittstemperatur $t_{ox,oe\ aus}$, insbesondere quadratisch, von dem Sauerstoff-Kohlenstoffverhältnis $O/C_{be}$, insbesondere quadratisch, und von der Brennstoffkenngröße 40, insbesondere linear, ab. Insbesondere weist die Regressionsfunktion für die molaren Konzentrationen $x_{i,bs,nb\ ein}$, insbesondere in Erdgas als Brennstoff, ein Bestimmtheitsmaß von mehr als 98%, insbesondere für Methan, bevorzugt von mehr als 99.98% auf, insbesondere für Kohlenstoffmonoxid, Kohlenstoffdioxid, Wasserstoff und/oder Wasser.

Insbesondere ist das Sauerstoff-Kohlenstoffverhältnis $O/C_{be}$ stromabwärts der Brennstoffelektrode 90 gegeben durch:

$$O/C_{be} = (i_{einh} * n_c * V_m * u)/(2 * F * \dot{V}_{bs,sys\ in} * K_c).$$

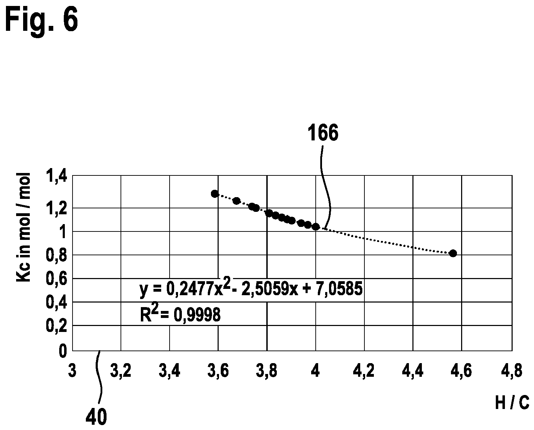

Insbesondere bezeichnet F die Faraday-Konstante und $K_c$ eine Kohlenstoffmenge in Mol pro Mol Brennstoff. Insbesondere ermittelt die Recheneinheit 54 die Kohlenstoffatomanzahl $K_c$ aus einer Regressionsfunktion 166 (siehe Figur 6), welche in Abhängigkeit von der Brennstoffkenngröße 40 in dem Speicher der Recheneinheit 54 hinterlegt ist. Optional wird in dem Sauerstoff-Kohlenstoffverhältnis $O/C_{be}$ stromabwärts der Brennstoffelektrode 90 als additiver Term ein Sauerstoffgehalt des Brennstoffs berücksichtigt.

Vorzugweise ist die Brennstoffkenngröße 40 innerhalb des Brennstoffzellensystems 12 konstant, insbesondere ist eine Leckrate des Brennstoffzellensystems 12 für Wasserstoff klein gegenüber einem Durchsatz an Wasserstoff durch das Brennstoffzellensystem 12. Insbesondere ist ein Kohlenstoff-Eingangsvolumenstrom gleich einem von der Brennstoffelektrode 90 zu dem Nachbrenner 44 strömenden Kohlenstoff-Volumenstrom:

$$\dot{V}_{bs,sys\ in} * K_c = \dot{V}_{bs,nb\ ein} * (x_{CH_4,bs,nb\ ein} + x_{CO,bs,nb\ ein} + x_{CO_2,bs,nb\ ein})$$

und

$$\dot{n}_{bs,nb\ ein} = \frac{\dot{V}_{bs,sys\ in}}{V_m * u} * \frac{K_c}{x_{CH_4,bs,nb\ ein} + x_{CO,bs,nb\ ein} + x_{CO_2,bs,nb\ ein}},$$

wobei insbesondere für die Kohlenstoff menge $K_c$ und für die molaren Konzentrationen der kohlenstoffhaltigen Bestandteile $x_{CH4,bs,nb\ ein}$, $x_{CO,bs,nb\ ein}$ und $x_{CO2,bs,nb\ ein}$ des aus der Brennstoffelektrode 90 austretenden Fluids die entsprechenden, insbesondere bereits genannten, Regressionsfunktionen von der Recheneinheit 54 eingesetzt werden.

Insbesondere verwendet die Recheneinheit 54 für den von der Brennstoffelektrode 90 kommenden leitungsgebundenen Enthalpiezufluss $\dot{H}_{bs,nb\ ein}$ den Ausdruck $\dot{H}_{bs,nb\ ein} = f_1(H/C, i_{einh}, \dot{V}_{bs,sys\ in}, t_{bs,nb\ ein}, t_{ox,oe\ aus})$, welcher nur von der Brennstoffkenngröße 40 und von in dem Abfrageschritt 64 ermittelbaren Betriebsparametern abhängt. Optional ermittelt die Recheneinheit 54 den Eingangsvolumenstrom $\dot{V}_{bs,sys\ in}$ mittels der Kennlinie 48 (siehe weiter unten), insbesondere anstelle einer Abfrage.

Vorzugweise ist in dem Speicher der Recheneinheit 54 ein Ausdruck $f_2$ hinterlegt, welcher den von der Oxidanselektrode 94 kommenden leitungsgebundenen Enthalpiezufluss $\dot{H}_{ox,nb\ ein}$, insbesondere ausschließlich, als Funktion von der Stromstärke $i_{einh}$, einem Oxidanseingangsvolumenstrom $\dot{V}_{ox,sys\ in}$, der Oxidansaustrittstemperatur $t_{ox,oe\ aus}$ des aus der Oxidanselektrode 94 austretenden Fluids und einer molaren Konzentration $x_{O_2,ox}$ von Sauerstoff in dem Oxidans, eine Brennereingangstemperatur $t_{bs,nb\ ein}$ des von der Brennstoffelektrode 90 kommenden und in den Nachbrenner 44 eintretenden Fluids ausdrückt. Insbesondere bei Verwendung von Umgebungsluft als Oxidans gilt näherungsweise:

$$\dot{H}_{ox,nb\ ein} = \dot{n}_{N_2,ox,nb\ ein} * h_{N_2}\left(t_{ox,oe\ aus}\right) + \dot{n}_{O_2,ox,nb\ ein} * h_{O_2}\left(t_{ox,oe\ aus}\right)$$

mit molaren Flussrate $\dot{n}_{N2,ox,nb\ ein}$, $\dot{n}_{O2,ox,nb\ ein}$ eines Stickstoffanteils $N_2$ und eines Sauerstoffanteils $O_2$ in dem Oxidans bei Eintritt in den Nachbrenner 44 und deren molaren Enthalpieanteilen $h_{N2}$,$h_{O2}$. Vorzugsweise werden in dem Kalibrierungsschritt 46 in dem Speicher der Recheneinheit 54 lineare Regressionsfunktionen für die molaren Enthalpieanteile $h_{N2}$,$h_{O2}$ hinterlegt, insbesondere analog wie für die molaren Enthalpieanteile $h_i$, weiter oben beschrieben in der Form $h_i = a_i * t_{ox,oe\ aus} + b_i$. Insbesondere wird für die molare Flussrate des Sauerstoffs der Ausdruck

$$\dot{n}_{O_2,ox,nb\ ein} = \frac{\dot{V}_{ox,sys\ in}}{V_m * u} - \frac{i_{einh} * n_c}{2F}$$

verwendet. Insbesondere ist der Stickstoffanteil innerhalb des Brennstoffzellensystems 12 inert, sodass gilt:

$$\dot{n}_{N_2,ox,nb\ ein} = \frac{\dot{V}_{ox,sys\ in}}{V_m * u}\left(1 - x_{O_2,ox}\right),$$

wobei $x_{O2,ox}$ eine molare Konzentration des Sauerstoffanteils ist. Insbesondere verwendet die Recheneinheit 54 für den von der Oxidanselektrode 94 kommenden leitungsgebundenen Enthalpiezufluss $\dot{H}_{ox,nb\ ein}$ den Ausdruck $\dot{H}_{ox,nb\ ein} = f_2(\dot{V}_{ox,sys\ in}, t_{ox,oe\ aus}, i_{einh}, x_{O2,ox})$, welcher nur von in dem Abfrageschritt 64 ermittelbaren Betriebsparametern und dem fixen Parameter $x_{O2,ox}$ abhängt.

Vorzugsweise ist in dem Speicher der Recheneinheit 54 ein Ausdruck $\boldsymbol{f_3}$ hinterlegt, welcher den aus dem Nachbrenner 44 über das Abgas austretenden leitungsgebundenen Enthalpieabfluss $\dot{H}_{ab,nb\ aus}$, insbesondere ausschließlich, als Funktion von dem Oxidanseingangsvolumenstrom $\dot{V}_{ox,sys\ in}$, dem Eingangsvolumenstrom $\dot{V}_{bs,sys\ in}$ *des* Brennstoffs, einer Brennerausgangstemperatur $t_{ab,nb\ aus}$ des Abgases und der Brennstoffkenngröße 40, ausdrückt. Insbesondere gilt:

$$\dot{H}_{ab,nb\ aus} = \sum_j h_j\left(t_{ab,nb\ aus}\right) * \dot{n}_{j,ab,nb\ aus},$$

mit molaren Flussrate $\dot{n}_{j,ab,nb\ aus}$ von aus dem Nachbrenner 44 ausströmenden Abgasanteilen und deren molaren Enthalpieanteilen $h_j$. Vorzugsweise setzt sich das Abgas, insbesondere von Spurengasen abgesehen ausschließlich, aus Kohlenstoffdioxid, Wasser, Stickstoff und Sauerstoff zusammen und insbesondere läuft der Index j des Enthalpieabflusses $\dot{H}_{ab,nb\ aus}$ aus dem Nachbrenner 44 über die Werte $CO_2$, $H_2O$, $N_2$ und/oder $O_2$. Vorzugsweise werden in dem Kalibrierungsschritt 46 in dem Speicher der Recheneinheit 54 lineare Regressionsfunktionen für die molaren Enthalpieanteile $h_j$ hinterlegt, insbesondere analog wie für die molaren Enthalpieanteile $h_i$ des in den Nachbrenner 44 einströmenden Fluids, weiter oben beschrieben in der Form $h_j = a_j * t_{ab,nb\ aus} + b_j$.

Insbesondere werden die molaren Flussrate $\dot{n}_{j,ab,nb\ aus}$ der aus dem Nachbrenner 44 ausströmenden Abgasanteile wie folgt von der Recheneinheit 54 ermittelt:

$$\dot{n}_{CO_2,ab,nb\ aus} = \frac{\dot{V}_{bs,sys\ in}}{V_m * u} * K_c$$

$$\dot{n}_{H_2O,ab,nb\,aus} = \frac{\dot{V}_{bs,sys\,in}}{V_m * u} * K_c * H/C$$

...

$$\dot{n}_{N_2,ab,nb\,aus} = \frac{\dot{V}_{ox,sys\,in}}{V_m * u} * K_c * (1 - x_{O_2,ox})$$

...

$$\dot{n}_{O_2,ab,nb\,aus} = \frac{\dot{V}_{ox,sys\,in}}{V_m * u} * x_{O_2,ox} - \dot{n}_{CO_2,ab,nb\,aus} - 0.5 * \dot{n}_{H_2O,ab,nb\,aus}$$

Insbesondere ermittelt die Recheneinheit 54 die Kohlenstoffatomanzahl $K_c$ aus einer Regressionsfunktion 166 (siehe Figur 6), welche in Abhängigkeit von der Brennstoffkenngröße 40 in dem Speicher der Recheneinheit 54 hinterlegt ist. Insbesondere verwendet die Recheneinheit 54 für den aus dem Nachbrenner 44 über das Abgas austretenden leitungsgebundenen Enthalpieabfluss $\dot{H}_{ab,nb\,aus}$ den Ausdruck $\dot{H}_{ab,nb}\,aus = f_3(H/C, \dot{V}_{bs,sys\,in}, \dot{V}_{ox,sys\,in}, t_{ab,nb\,aus}, x_{O2,ox})$, welcher nur von der Brennstoffkenngröße 40, von in dem Abfrageschritt 64 ermittelbaren Betriebsparametern und dem fixen Parameter $x_{O_2,ox}$ abhängt.

Insbesondere verwendet die Recheneinheit 54 für die Brennergruppe die Leistungsbilanz:

$$\dot{Q}_{nb} = f_1(H/C, i_{einh}, \dot{V}_{bs,sys\,in}, t_{bs,nb\,ein}, t_{ox,oe\,aus}) + f_2\left(\dot{V}_{ox,sys\,in}, t_{ox,oe\,aus}, i_{einh}, x_{O\,2,ox}\right) - f_3(H/C, \dot{V}_{bs,sys\,in}, \dot{V}_{ox,sys\,in}, t_{ab,nb\,aus}, x_{O_2,ox})$$

Vorzugsweise wird das Brennstoffzellensystem 12 in dem Kalibrierungsschritt 46 mit einem Brenngas mit bekannter Brennstoffkenngröße 40 betrieben, beispielsweise mit reinem Methan mit einem Wasserstoff-Kohlenstoffverhältnis $H/C = 4$ und der potentiell für eine Umsetzung zur Verfügung stehenden Elektronenanzahl $K_{e-} = 8$. Insbesondere wird das Brennstoffzellensystem 12 in dem Kalibrierungsschritt 46 bei verschiedenen Arbeitspunkten des Brennstoffzellensystems 12 betrieben, welche insbesondere durch die abgegriffene Stromstärke $i_{einh}$, die Brennerausgangstemperatur $t_{ab,nb\,\alpha us}$ und die Oxidansaustrittstemperatur $t_{ox,oe\,aus}$ charakterisierbar sind. Insbesondere berechnet die Recheneinheit 54 den Wärmefluss $\dot{Q}_{nb}$ des Nachbrenners 44 in dem Kalibrierungsschritt 46 mittels der Leistungsbilanz. Vorzugsweise erstellt die Recheneinheit 54 eine Regressionsfunktion für den Wärmefluss $\dot{Q}_{nb}$ des Nachbrenners 44 in der Form $\dot{Q}_{nb} = f_0(i_{einh}, t_{ox,oe\,aus}, t_{ab,nb\,aus})$. Vorzugsweise verwendet die Recheneinheit 54 die Regressionsfunktion für den Wärmefluss $\dot{Q}_{nb}$ des Nachbrenners 44 in dem Brennstoffanalyseschritt 60, insbesondere um die Brennstoffkenngröße 40 für einen unbekannten, insbesondere nicht im Vorfeld analysierten, Brennstoff mittels der Leistungsbilanz zu ermitteln.

Im Folgenden wird als Beispiel eine Auswertung der Kennlinie 48 der Fördergruppe im Rahmen des Brennstoffanalyseschritts 60 näher erläutert. Insbesondere kann die Auswertung der Kennlinie 48 ergänzend zu der Auswertung der Leistungsbilanz oder alternativ dazu durchgeführt werden. Figur 4 zeigt zur Veranschaulichung die Kennlinie 48 der Fördergruppe, insbesondere der Brennstofffördereinheit 98. Insbesondere verknüpft die Kennlinie 48 der Fördergruppe den Durchfluss, insbesondere den Eingangsvolumenstrom $\dot{V}_{bs,sys\,in}$, des Brennstoffs mit einem Betriebsparameter 158 der Brennstofffördereinheit 98, insbesondere einer von der Brennstofffördereinheit 98 erzeugten Druckdifferenz $\Delta p$. Insbesondere weist die Kennlinie 48 als Parameter eine Zusammensetzung des Brennstoffs, insbesondere eine Dichte $\rho_{bs}$ des Brennstoffs, auf. Insbesondere weist die Kennlinie 48 für unterschiedliche Zusammensetzungen des Brennstoffs unterschiedliche Ausprägungen 160, 162 auf. Beispielsweise weist die Kennlinie 48 als Parameter eine eingestellte Förderfrequenz $f_f$ eines Rotationskörpers der Brennstofffördereinheit 98 auf. Insbesondere verschieben sich Ausprägungen 160', 162', 160", 162" mit zunehmender Förderfrequenz $f_f$ zu höheren Maximalwerten für den Durchfluss und/oder für den Betriebsparameter 158 der Brennstofffördereinheit 98.

Vorzugsweise verwendet die Recheneinheit 54 für die Kennlinie 48 den Ausdruck

$$\dot{V}_{bs,sys\,in} = a * \Delta p^2 * \left(\frac{\rho_0}{\rho_{bs}}\right)^2 * f_f^2 + b * \Delta p * \left(\frac{\rho_0}{\rho_{bs}}\right) * f_f + c * f_f + d,$$

wobei *a, b, c, d* fixe Parameter sind, die durch die konkrete Ausgestaltung der Brennstofffördereinheit 98 gegeben sind, und $\rho_0$ eine Referenzdichte ist. Insbesondere wird in dem Kalibrierungsschritt 46 die Kennlinie 48 mit einem Fluid mit

der Referenzdichte $\rho_0$ erfasst und in dem Speicher der Recheneinheit 54 hinterlegt. Insbesondere ist die Dichte $\rho_{bs}$ des Brennstoffs abhängig von der Brennstoffkenngröße 40. Insbesondere verwendet die Recheneinheit 54 für die Dichte $\rho_{bs}$ des Brennstoffs eine Regressionsfunktion 172, welche abhängig von der Brennstoffkenngröße 40 ist (siehe Figur 8). Um den Systemparameter zu ermitteln, wird in dem Brennstoffanalyseschritt 60 die Betriebscharakteristik zumindest einer der Unterbaugruppen 34, beispielsweise der Fördergruppe, mittels eines Gleichungssystems mit dem Systemparameter in Beziehung gesetzt. Insbesondere verwendet die Recheneinheit 54 eine weitere Kennlinie der Fördergruppe, welche den kalorischen Durchflussmesser 105 charakterisiert, insbesondere in der Form:

$$\dot{V}_{bs,sys\ in} = \dot{V}_0 * \frac{C_{p\ 0}}{C_p},$$

wobei $\dot{V}_0$ ein von dem kalorischen Durchflussmesser 105 gemessener Volumenstrom und $C_{p\ 0}$ eine molare Referenzwärmekapazität ist. Insbesondere wird in dem Kalibrierungsschritt 46 die weitere Kennlinie mit einem Fluid mit der molaren Referenzwärmekapazität $C_{p\ 0}$ erfasst und in dem Speicher der Recheneinheit 54 hinterlegt. Insbesondere ist die Wärmekapazität $C_p$ des Brennstoffs abhängig von der Brennstoffkenngröße 40. Insbesondere verwendet die Recheneinheit 54 für die molare Wärmekapazität $C_p$ des Brennstoffs eine Regressionsfunktion 174, welche abhängig von der Brennstoffkenngröße 40 ist (siehe Figur 9).

Insbesondere wertet die Recheneinheit 54 den Ausdruck für die Kennlinie 48 und der Ausdruck für die weitere Kennlinie der Fördergruppe gemeinsam aus. Insbesondere fragt die Recheneinheit 54 die Druckdifferenz und die Förderfrequenz von der Brennstofffördereinheit 98 und/oder der Steuereinheit des Brennstoffzellensystems 12 in dem Abfrageschritt 64 ab. Insbesondere weisen der Ausdruck für die Kennlinie 48 und den Ausdruck für die weitere Kennlinie der zumindest eine Unterbaugruppe 34 als Unbekannte die Brennstoffkenngröße 40 und den Eingangsvolumenstrom $\dot{V}_{bs,sys\ in}$ auf. Insbesondere löst die Recheneinheit 54 das Gleichungssystem aus dem Ausdruck für die Kennlinie 48 und den Ausdruck für die weitere Kennlinie der zumindest einen Unterbaugruppe 34 nach der Brennstoffkenngröße 40 auf. Insbesondere löst die Recheneinheit 54 das Gleichungssystem aus dem Ausdruck für die Kennlinie 48 und den Ausdruck für die weitere Kennlinie der zumindest einen Unterbaugruppe 34 nach dem Eingangsvolumenstrom $\dot{V}_{bs,sys\ in}$ auf. Optional fasst die Recheneinheit 54 die Kennlinie 48, die weitere Kennlinie der zumindest einen Unterbaugruppe 34 und/oder die Leistungsbilanz in ein einzelnes Gleichungssystem zusammen.

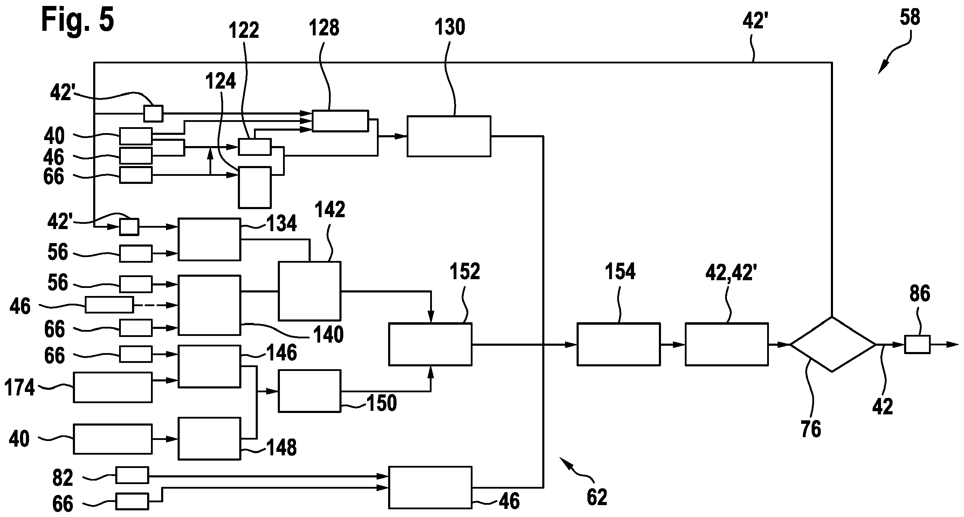

In dem Rezirkulationsermittlungsschritt 62 wird mittels der Betriebscharakteristik eine Leistungsbilanz zumindest einer der Unterbaugruppen 24, 26, 28, 30, 32 erstellt. Zusätzlich oder alternativ wird in dem Rezirkulationsermittlungsschritt 62 als Betriebscharakteristik zumindest eine Kennlinie (analog zu Figur 5) einer der Unterbaugruppen 35 ausgewertet, welche einen Einfluss auf einen Durchfluss eines Betriebsstoffs, insbesondere eines über die Rezirkulationsleitung 102 rückgeführten Fluids, des Brennstoffzellensystems 12 aufweist.

Um den Systemparameter zu ermitteln, wird in dem Rezirkulationsermittlungsschritt 62 die Betriebscharakteristik zumindest einer der Unterbaugruppen 34, beispielsweise der weiteren Fördergruppe, mittels eines Gleichungssystems mit dem Systemparameter in Beziehung gesetzt. Insbesondere wertet die Recheneinheit 54 die Kennlinie der weiteren Fördergruppe analog wie für die Fördergruppe im vorherigen Abschnitt beschrieben über das Gleichungssystem:

$$\dot{V}_{rec} = a * \Delta p^2 * \left(\frac{\rho_0}{\rho_{rec}}\right)^2 * f_f^2 + b * \Delta p * \left(\frac{\rho_0}{\rho_{rec}}\right) * f_f + c * f_f + d,$$

$$\dot{V}_{rec} = \dot{V}_0 * \frac{C_{p\ 0}}{C_{p,rec}},$$

aus, wobei die Größen $a, b, c, d, f_f, \Delta p, \rho_0$ sich hier auf die Rezirkulationsfördereinheit 104, die Größen $\dot{V}_0$, $C_{p\ 0}$ auf den weiteren kalorischen Durchflussmesser 106 und die Größen $\dot{V}_{rec}$, $\rho_{rec}$, $C_{p,rec}$ sich auf das in der Rezirkulationsleitung 102 geführte Fluid beziehen. Insbesondere ist eine Dichte $\rho_{rec}$ des in der Rezirkulationsleitung 102 geführten Fluids abhängig von der Rezirkulationsrate 42.

Insbesondere verwendet die Recheneinheit 54 für die Dichte $\rho_{rec}$molare Wärmekapazität [] $C_{p,rec}$ die molare Wärmekapazität [] $C_{p,rec}$ des in der Rezirkulationsleitung 102 geführten Fluids eine Regressionsfunktion, welche abhängig von der Rezirkulationsrate 42 ist.

Figur 5 zeigt die Erstellung einer weiteren Leistungsbilanz im Rahmen der Teilsystemphase 58. Im Folgenden wird die weitere Leistungsbilanz am Beispiel der Reformergruppe näher erläutert, wobei insbesondere jede der Unterbaugruppen 24, 26, 28, 30, 32 für die Teilsystemphase 58 analog auswertbar ist. Die Recheneinheit 54 erstellt die Leistungsbilanz für eine der Unterbaugruppen 26, welche den Reformer 52 des Brennstoffzellensystems 12 umfasst. Beispielsweise stellt die Recheneinheit 54 bei der Reformergruppe die Leistungsbilanz in einem Bilanzierungsschritt 154 des Verfahrens 10

$$\dot{Q}_{ref} = \dot{H}_{bs,ref\ in} - \dot{H}_{bs,ref\ aus}$$

zumindest aus einem von dem Brennstoff getragenen Enthalpiezufluss $\dot{H}_{bs,ref\,ein}$ zu dem Reformer 52, aus einem von aus dem Reformer 52 austretenden reformierten Brennstoff getragenen Enthalpieabfluss $\dot{H}_{bs,ref\,aus}$ und einem Wärmefluss $\dot{Q}_{ref}$, insbesondere Wärmeverlust, des Reformers 52 zusammen.

Insbesondere ermittelt die Recheneinheit 54 den Enthalpiezufluss $\dot{H}_{bs,ref\,ein}$ zu dem Reformer 52 in einem Zuflussermittlungsschritt 152 des Verfahrens 10 zumindest aus einem von frischem, insbesondere stromaufwärts der Einspeisestelle 103 befindlichem, Brennstoff getragenen Brennstoffenthalpiezufluss $\dot{H}_{bs,fr}$ und einem über die Rezirkulationsleitung 102 kommenden Rezirkulationsenthalpiezufluss $\dot{H}_{rec}$. Vorzugsweise wertet die Recheneinheit 54 in einem Rezirkulationsenthalpieschritt 142 des Verfahrens 10 den Rezirkulationsenthalpiezufluss $\dot{H}_{rec}$ zu dem Reformer 52 aus. Vorzugsweise ist in dem Speicher der Recheneinheit 54 ein Ausdruck $f_4$ hinterlegt, welcher den Rezirkulationsenthalpiezufluss $\dot{H}_{rec}$, insbesondere ausschließlich, als Funktion von der Rezirkulationsrate 42, von der molaren Flussrate $\dot{n}_{bs,nb\,ein}$ des von der Brennstoffelektrode 90 in den Nachbrenner 44 strömenden Fluids, von einer Einspeisetemperatur $t_{rec,mix}$ des in der Rezirkulationsleitung 102 geführten Fluids in die Brennstoffleitung 50 und von der molaren Konzentration $x_{l,rec}$ der Bestandteile dieses Fluids abhängt. Für den Rezirkulationsenthalpiezufluss $\dot{H}_{rec}$ geht die Recheneinheit 54 von dem Ausdruck

$$\dot{H}_{rec} = \dot{n}_{rec} * \sum_{l} h_l\left(t_{rec,mix}\right) * x_{l,rec}$$

aus, wobei $\dot{n}_{rec}$ eine molare Flussrate des von der Rezirkulationsleitung 102 geführten Fluids ist und $h_l$ den Bestandteilen dieses Fluids zugeordnete molaren Enthalpieanteile. In einem Anteilsermittlungsschritt 140 des Verfahrens 10 ermittelt die Recheneinheit 54 die Enthalpieanteile $h_l$ des in der Rezirkulationsleitung 102 geführten Fluids. Insbesondere wertet die Recheneinheit 54 in dem Anteilsermittlungsschritt 140 lineare Regressionen der molaren Enthalpieanteile $h_l$ des in der Rezirkulationsleitung 102 geführten Fluids aus, insbesondere analog zu der Auswertung der Nachbrennergruppe, insbesondere welche in dem Kalibrierungsschritt 46 für einen vorgesehenen Temperaturbereich der Einspeisetemperatur $t_{rec,mix}$ zwischen 120°C und 250°C in dem Speicher der Recheneinheit 54 hinterlegt wird, insbesondere in der Form $h_l = a_l * t_{rec,mix} + b_l$. Alternativ werden in dem weiteren Abfrageschritt 66 die molaren Enthalpieanteile $h_l$ des in der Rezirkulationsleitung 102 geführten Fluids von der Recheneinheit 54 aus einer Datenbank ausgelesen. Vorzugsweise fragt die Recheneinheit 54 die Einspeisetemperatur $t_{rec,mix}$ in dem weiteren Abfrageschritt 66 von der Steuereinheit des Brennstoffzellensystems 12 und/oder der Temperatursensoreinheit ab. Insbesondere verwendet die Recheneinheit 54 für die molaren Konzentrationen $x_{l,rec}$ des Fluids innerhalb der Rezirkulationsleitung 102 molare Konzentrationen $x_{i,bs,nb\,ein}$ der Bestandteile des in den Nachbrenner 44 strömenden Fluids, die insbesondere in der Systemphase 56 bereits ermittelt wurden oder analog zur Systemphase 56 oder anderweitig ermitteltet werden. Insbesondere nimmt der Index $l$ des Rezirkulationsenthalpiezuflusses $\dot{H}_{rec}$ die Werte $CH_4$, $CO$, $CO_2$, $H_2$ und/oder $H_2O$ an. Vorzugsweise wertet die Recheneinheit 54 in einem Flussratenermittlungsschritt 134 des Verfahrens 10 für die molare Flussrate $\dot{n}_{rec}$ des von der Rezirkulationsleitung 102 geführten Fluids den Ausdruck

$$\dot{n}_{rec} = \frac{r}{1-r} * \dot{n}_{bs,nb\ ein}$$

aus, insbesondere wobei die molare Flussrate $\dot{n}_{bs,nb\,ein}$ des von der Brennstoffelektrode 90 in den Nachbrenner 44 strömenden Fluids bereits in der Systemphase 56 ermittelt wurde oder analog zur Systemphase 56 ermittelt wird. Insbesondere verwendet die Recheneinheit 54 für den Rezirkulationsenthalpiezufluss $\dot{H}_{rec}$ den Ausdruck $\dot{H}_{rec} = f_4(r, \dot{n}_{bs,nb\,ein}, t_{rec,mix}, x_{l,rec})$, welcher nur von der Rezirkulationsrate 42, von in dem weiteren Abfrageschritt 66 ermittelbaren Betriebsparametern und bereits bekannten Parametern abhängt.

Vorzugsweise wertet die Recheneinheit 54 in einem Brennstoffenthalpieschritt 150 des Verfahrens 10 den Brennstoffenthalpiezufluss $\dot{H}_{rec}$ zu dem Reformer 52 aus. Vorzugsweise ist in dem Speicher der Recheneinheit 54 ein Ausdruck $f_5$ hinterlegt, welcher den Brennstoffenthalpiezufluss $\dot{H}_{bs,fr}$ insbesondere ausschließlich, als Funktion von der Brennstoffkenngröße 40 und dem Eingangsvolumenstrom $V\cdot_{bs,sys\ in}$ beschreibt. Insbesondere geht die Recheneinheit 54 für die Brennstoffenthalpiezufluss aus von:

$$\dot{H}_{bs,fr} = \frac{\dot{V}_{bs,sys\ in}}{V_m * u} * h_{bs} ,$$

wobei $h_{bs}$ eine molare Enthalpie des frischen Brennstoffs ist. Beispielsweise bestimmt die Recheneinheit 54 die molare Enthalpie $h_{bs}$ des frischen Brennstoffs in einem Brennstoffenthalpieermittlungsschritt 148 des Verfahrens 10 über eine Regressionsfunktion 139, welche insbesondere abhängig von der Brennstoffkenngröße 40 ist (siehe Figur 10). Beispielsweise bestimmt die Recheneinheit 54 in dem Brennstoffenthalpieermittlungsschritt 148 des Verfahrens 10 die molare Enthalpie $h_{bs}$ des frischen Brennstoffs durch eine Rekonstruktion der Zusammensetzung des frischen Brennstoffs in Abhängigkeit von dem Brennstoffkenngröße 40, insbesondere analog wie bei den vom Brennstoff getragenen Enthalpiezufluss $\dot{H}_{bs,nb\ ein}$ zu dem Nachbrenner 44, insbesondere unter der Annahme, dass der frische Brennstoff zumindest im Wesentlichen, insbesondere bis auf Spurengase ausschließlich, aus Methan $CH_4$, Wasserstoff $H_2$, Kohlenstoffdioxid $CO_2$, Ethan $C_2H_6$ und/oder Stickstoff $N_2$ zusammengesetzt ist. Optional wird bei der Rekonstruktion der Zusammensetzung des frischen Brennstoffs zusätzlich ein Anteil an Propan $C_3H_8$ und/oder Butan $C_4H_{10}$ berücksichtigt. Vorzugsweise ermittelt die Recheneinheit 54 in einem Durchflussermittlungsschritt 146 des Verfahrens 10 den Eingangsvolumenstrom $\dot{V}_{bs,sys\ in}$ des Brennstoffs. Vorzugsweise fragt die Recheneinheit 54 in dem weiteren Abfrageschritt 66 einen Messwert von dem kalorimetrischen Durchflussmesser 105 ab und korrigiert diesen, insbesondere wie bereits weiter oben beschrieben, mittel der Regressionsfunktion 174 für die molare Wärmekapazität $C_p$ des Brennstoffs und der weiteren Kennlinie der Fördergruppe. Alternativ verwendet die Recheneinheit 54 in dem Durchflussermittlungsschritt 146 einen Wert für den Eingangsvolumenstrom $\dot{V}_{bs,sys\ in}$ des Brennstoffs der bereits in der Systemphase 56 ermittelt wurde. Die Recheneinheit 54, insbesondere bei einer Ausgestaltung des Brennstoffzellensystems 12 mit einem alternativen Durchflussmesser, fragt in dem Abfrageschritt 64 in einer Datenbank und/oder in ihrem Speicher hinterlegte zusätzliche Brennstoffkenngrößen, wie eine Viskosität des Brennstoffs, ab, insbesondere um von einem Messwert des alternativen Durchflussmessers den Eingangsvolumenstrom $\dot{V}_{bs,sys\ in}$ des Brennstoffs zu ermitteln. Insbesondere verwendet die Recheneinheit 54 für Brennstoffenthalpiezufluss $\dot{H}_{bs,fr}$ den Ausdruck $\dot{H}_{bs,fr} = f_5(V_{bs,sys\ in}, H/C)$, welcher, insbesondere ausschließlich, aus abfragbaren und/oder bereits, insbesondere aus der Systemphase 56, bekannten Parametern abhängt.

Vorzugsweise wertet die Recheneinheit 54 in einem Enthalpieaustrittsschritt 130 des Verfahrens 10 den vom reformierten Brennstoff getragenen Enthalpieabfluss $\dot{H}_{bs,ref\ aus}$ aus. Vorzugsweise ist in dem Speicher der Recheneinheit 54 ein Ausdruck $f_5$ hinterlegt, welcher den Enthalpieabfluss $\dot{H}_{bs,ref\ aus}$ aus dem Reformer 52, insbesondere ausschließlich, als Funktion von der Rezirkulationsrate 42, von der Brennstoffkenngröße 40, von der Stromstärke $i_{einh}$, von dem Eingangsvolumenstrom $\dot{V}_{bs,sys\ in}$ und von einer Reformerausgangstemperatur $t_{bs,ref\ out}$ des reformierten Brennstoffs abhängt. Für den Enthalpieabfluss $\dot{H}_{bs,ref\ aus}$ aus dem Reformer 52 geht die Recheneinheit 54 von dem Ausdruck

$$\dot{H}_{bs,ref\ aus} = \dot{n}_{bs,ref\ aus} * \sum_k h_k\left(t_{bs,ref\ out}\right) * x_{k,bs,ref\ out},$$

aus, wobei $\dot{n}_{bs,ref\ aus}$ eine molare Flussrate des refomierten Brennstoffs und $x_{k,bs,ref\ out}$ molare Konzentrationen von Bestandteilen des reformierten Brennstoffs mit molarem Enthalpieanteil $h_k$ bezeichnet.

Insbesondere analog zu der Auswertung der Nachbrennergruppe, wird in dem Kalibrierungsschritt 46 eine Regressionsfunktion für die molaren Konzentrationen $x_{k,bs,ref\ out}$ in dem Speicher der Recheneinheit 54 hinterlegt, welche insbesondere Minima der Gibbs-Energie in Abhängigkeit von der Reformerausgangstemperatur $t_{bs,ref\ out}$, einem Sauerstoff-Kohlenstoffverhältnis $O/C_{ref}$ in dem reformierten Brennstoff und von der Brennstoffkenngröße 40 wiedergibt. Insbesondere nimmt der Index $k$ Enthalpieabfluss $\dot{H}_{bs,ref\ aus}$ aus dem Reformer 52 die Werte $CH_4$, $CO$, $CO_2$, $H_2$ und/oder $H_2O$ an. Insbesondere hängt die Regressionsfunktion für die molaren Konzentrationen $x_{k,bs,ref\ out}$ von der Reformerausgangstemperatur $t_{bs,ref\ out}$, insbesondere quadratisch, von dem SauerstoffKohlenstoffverhältnis $O/C_{ref}$ des reformierten Brennstoffs, insbesondere quadratisch, und von der Brennstoffkenngröße 40, insbesondere linear, ab.

Insbesondere wertet die Recheneinheit 54 die Regressionsfunktion für die molaren Konzentrationen $x_{k,bs,ref\ out}$ in einem Konzentrationsermittlungsschritt 122 des Verfahrens 10 aus. Insbesondere ermittelt die Recheneinheit 54 das Sauerstoff-Kohlenstoffverhältnis $O/C_{ref}$ des reformierten Brennstoffs anhand von

$$O/C_{ref} = r * O/C_{be} + (1 - r) * O/C_{bs},$$

wobei $O/C_{bs}$ ein Sauerstoffkohlenstoffverhältnis des frischen Brennstoffs ist. Alternativ oder zusätzlich ermittelt die Recheneinheit 54 das SauerstoffKohlenstoffverhältnis $O/C_{ref}$ des reformierten Brennstoffs anhand von

$$O/C_{ref} = O/C_{be} - \frac{\dot{n}_{o,einh\ trans}}{\dot{n}_{c,ref\ aus}},$$

wobei ein in der Brennstoffzelleneinheit 88 transferierter molarer Sauerstoffstrom gegeben ist, durch $\dot{n}_{o,einh\ trans} = i_{einh} * \frac{n_c}{2F}$ und wobei ein den Reformer 52 verlassender molarer Kohlenstoffstrom gegeben ist durch $\dot{n}_{c,ref\ aus} = \frac{\dot{V}_{bs,sys\ in}}{V_m * u} * \frac{K_c}{1-r}$. Insbesondere ist die Brennstoffkenngröße 40 bereits aus der Systemphase 56 und/oder anderweitig bekannt. Insbesondere fragt die Recheneinheit 54 die Reformerausgangstemperatur $t_{bs,ref\ out}$ in dem weiteren Abfrageschritt 66 ab.

Insbesondere ermittelt die Recheneinheit 54 in einem weiteren Flussratenermittlungsschritt 128 des Verfahrens 10 die molare Flussrate [] $\dot{n}_{bs,ref\ aus}$ des reformierten Brennstoffs. Insbesondere wertet die Recheneinheit 54 die molare Flussrate [] $\dot{n}_{bs,ref\ aus}$ des reformierten Brennstoffs anhand des Ausdrucks

$$\dot{n}_{bs,ref\ aus} = \frac{\dot{V}_{bs,sys\ in}}{V_m * u} * \frac{K_c}{(1-r)} * \frac{1}{(x_{CH_4,bs,ref\ out} + x_{CO,bs,ref\ out} + x_{CO_2,bs,ref\ out})}$$

aus. Insbesondere wertet die Recheneinheit 54 für die molaren Konzentrationen $x_{CH4,bs,ref\ out}$, $x_{CO,bs,ref\ out}$, $x_{CO2,bs,ref\ out}$ und/oder die Kohlenstoffmenge $K_c$ in dem weiteren Flussratenermittlungsschritt 128 die entsprechende Regressionsfunktionen 166 aus.

In einem weiteren Anteilsermittlungsschritt 124 des Verfahrens 10 ermittelt die Recheneinheit 54 die molaren Enthalpieanteile $h_k$ des reformierten Brennstoffs. Die Recheneinheit 54, insbesondere analog zu der Auswertung der Nachbrennergruppe, wertet insbesondere in dem weiteren Anteilsermittlungsschritt 124 lineare Regressionen der molaren Enthalpieanteile $h_k$ des reformierten Brennstoffs aus. Insbesondere werden die lineare Regressionen der molaren Enthalpieanteile $h_k$ des reformierten Brennstoffs in dem Kalibrierungsschritt 46 für einen vorgesehenen Temperaturbereich der Reformerausgangstemperatur $t_{bs,ref\ out}$, beispielsweise zwischen 500°C und 600°C, in dem Speicher der Recheneinheit 54 hinterlegt, insbesondere in der Form $h_k = a_k * t_{bs,ref\ out} + b_k$. Alternativ werden in dem weiteren Abfrageschritt 66 die molaren Enthalpieanteile $h_k$ des reformierten Brennstoffs von der Recheneinheit 54 aus einer Datenbank ausgelesen.

Insbesondere verwendet die Recheneinheit 54 für Enthalpieabfluss $\dot{H}_{bs,ref\ aus}$ aus dem Reformer 52 den Ausdruck $\dot{H}_{bs,fr} = f_6(r, H/C, I_{einh}, \dot{V}_{bs,sys\ in}, t_{bs,ref\ out})$, welcher, insbesondere ausschließlich, aus abfragbaren und/oder bereits, insbesondere aus der Systemphase 56, bekannten Parametern sowie von der Rezirkulationsrate 42 abhängt.

Insbesondere verwendet die Recheneinheit 54 für die Reformergruppe die Leistungsbilanz:

$$\dot{Q}_{nb} = f_4(r, \dot{n}_{bs,nb\ ein}, t_{rec,mix}, x_{l,rec}) + f_5(\dot{V}_{bs,sys\ in}, H/C) - f_6(r, H/C, I_{einh}, \dot{V}_{bs,sys\ in}, t_{bs,ref\ out})$$

Vorzugsweise wird das Brennstoffzellensystem 12 in dem Kalibrierungsschritt 46 mit einem Brenngas mit bekannter Brennstoffkenngröße 40 und insbesondere bekannter Rezirkulationsrate 42 betrieben, beispielsweise mit reinem Methan mit einem Wasserstoff-Kohlenstoffverhältnis $H/C = 4$ und potentiell für eine Umsetzung zur Verfügung stehenden Elektronenanzahl $K_{e-} = 8$, wobei die Rezirkulationsrate 42 beispielsweise mittels Gaschromatographie erfassbar ist. Insbesondere wird das Brennstoffzellensystem 12 in dem Kalibrierungsschritt 46 bei verschiedenen Arbeitspunkten des Brennstoffzellensystems 12, insbesondere der Reformergruppe, betrieben, welche insbesondere durch die abgegriffene Stromstärke $i_{einh}$, die Einspeisetemperatur $t_{rec,mix}$ und die Reformerausgangstemperatur $t_{bs,ref\ out}$ charakterisierbar sind. Insbesondere berechnet die Recheneinheit 54 den Wärmefluss $\dot{Q}_{ref}$ der Reformergruppe in dem Kalibrierungsschritt 46 mittels der Leistungsbilanz für die Reformergruppe. Vorzugsweise erstellt die Recheneinheit 54 eine Regressionsfunktion für den Wärmefluss $\dot{Q}_{ref}$ der Reformergruppe in der Form $\dot{Q}_{nb} = f_7(i_{einh}, t_{bs,ref\ out}, t_{rec,mix})$. Vorzugsweise verwendet die Recheneinheit 54 die Regressionsfunktion für den Wärmefluss $\dot{Q}_{ref}$ der Reformergruppe in dem Bilanzierungsschritt 154, insbesondere um die Rezirkulationsrate 42 zu ermitteln.

Figuren 6 bis 10 zeigen jeweils eine der bereits genannten Regressionsfunktionen 166, 168, 172, 174, 139 in Abhängigkeit von der Brennstoffkenngröße 40, hier explizit für das Wasserstoff-Kohlenstoffverhältnis H/C. Insbesondere verwendet die Recheneinheit 54 für die hier gezeigten Regressionsfunktionen 166, 168, 172, 174, 139 jeweils ein quadratisches Polynom, insbesondere ein Polynom zweiten Grades, in der Brennstoffkenngröße 40. Besonders bevorzugt werden die hier gezeigten Regressionsfunktionen 166, 168, 172, 174, 139 unter Berücksichtigung inerter Fluidanteile in dem Brennstoff erstellt. Alternativ werden die hier gezeigten Regressionsfunktionen 166, 168, 172, 174, 139 ohne Kenntnis der inerten Fluidanteile des Brennstoffs erstellt.

Figur 6 zeigt die Regressionsfunktion 166 für die Kohlenstoffmenge $K_c$ in Abhängigkeit von der Brennstoffkenngröße 40. Insbesondere weist die Regressionsfunktion 166 für die Kohlenstoffmenge $K_c$ ein Bestimmtheitsmaß von mehr als 99,97 % auf. Insbesondere sind Terme des entsprechenden Polynoms ab der 2. Ordnung in einem relevanten Bereich für die Brennstoffkenngröße 40 zumindest kleiner als ein linearer Term des Polynoms. Typischerweise, insbesondere zumindest in Europa, liegt das Wasserstoff-Kohlenstoffverhältnis H/C für Erdgas als Brennstoff zwischen 3.6 und 4.1.

Figur 7 zeigt die Regressionsfunktion 168 für die weitere Brennstoffkenngröße 78, insbesondere die potentielle Elektronenanzahl $K_{e-}$, in Abhängigkeit von der Brennstoffkenngröße 40. Insbesondere sind Terme des entsprechenden Polynoms ab der 2. Ordnung in einem relevanten Bereich für die Brennstoffkenngrö-βe 40 zumindest kleiner als ein linearer Term des Polynoms. Insbesondere weist die Regressionsfunktion 166 für die weitere Brennstoffkenngröße 78 ein Bestimmtheitsmaß von mehr als 99,8 % auf. Insbesondere ist über die Regressionsfunktion 168 für die weitere Brennstoffkenngröße 78, die potentielle Elektronenanzahl $K_{e-}$ und das Wasserstoff-Kohlenstoffverhältnis H/C in allen beschriebenen Verfahrensschritten beliebig austauschbar.

Figur 8 zeigt die Regressionsfunktion 172 für die Dichte p des Brennstoffs in Abhängigkeit von der Brennstoffkenngröße 40. Insbesondere sind Terme des entsprechenden Polynoms ab der 2. Ordnung in einem relevanten Bereich für die Brennstoffkenngröße 40 zumindest kleiner als ein linearer Term des Polynoms.

Insbesondere weist die Regressionsfunktion 172 für die Dichte p des Brennstoffs ein Bestimmtheitsmaß von mehr als 99,65 % auf.

Figur 9 zeigt die Regressionsfunktion 174 für die molare Wärmekapazität $C_p$ des Brennstoffs in Abhängigkeit von der Brennstoffkenngröße 40. Insbesondere weist die Regressionsfunktion 174 für die molare Wärmekapazität $C_p$ des Brennstoffs ein Bestimmtheitsmaß von mehr als 99,7 % auf.

Figur 10 zeigt die Regressionsfunktion 139 für die molare Enthalpie $h_{bs}$ von Erdgas als Brennstoff in Abhängigkeit von der Brennstoffkenngröße 40. Insbesondere weist die Regressionsfunktion 139 für die molare Enthalpie $h_{bs}$ von Erdgas ein Bestimmtheitsmaß von mehr als 98,8 % auf.

## Patentansprüche

1. Verfahren zur Überwachung eines Brennstoffzellensystems, insbesondere eines Festoxidbrennstoffzellensystems, welches in zumindest einem Verfahrensschritt in mehrere Unterbaugruppen (14, 16, 18, 19, 20, 22, 24, 26, 28, 30, 31, 32, 33, 34, 35) unterteilt wird und wobei in zumindest einem Verfahrensschritt ein charakteristischer Systemparameter, insbesondere eine Brennstoffnutzung (36, 38), des Brennstoffzellensystems ermittelt wird, **dadurch gekennzeichnet, dass** in zumindest einem Verfahrensschritt eine Betriebscharakteristik zumindest einer der Unterbaugruppen (14, 16, 18, 19, 20, 22, 24, 26, 28, 30, 31, 32, 33, 34, 35) des Brennstoffzellensystems zur Implementierung eines Softsensors für den Systemparameter verwendet wird.

2. Verfahren nach Anspruch 1, **dadurch gekennzeichnet, dass** in zumindest einem Verfahrensschritt mittels der Betriebscharakteristik eine Leistungsbilanz zumindest einer der Unterbaugruppen (14, 16, 18, 19, 20, 22, 24, 26, 28, 30, 31, 32, 33) erstellt wird.

3. Verfahren zumindest nach Anspruch 2, **dadurch gekennzeichnet, dass** zumindest eine der Unterbaugruppen (14, 18, 22), deren Leistungsbilanz erstellt wird, einen Nachbrenner (44) des Brennstoffzellensystems umfasst.

4. Verfahren nach einem der vorhergehenden Ansprüche, **dadurch gekennzeichnet, dass** in zumindest einem Kalibrierungsschritt (46) die Betriebscharakteristik, insbesondere ein Wärmeverlust, einer der Unterbaugruppen (14, 16, 18, 19, 20, 22, 24, 26, 28, 30, 31, 32, 33) ermittelt wird.

5. Verfahren nach einem der vorhergehenden Ansprüche, **dadurch gekennzeichnet, dass** in zumindest einem Verfahrensschritt als Betriebscharakteristik zumindest eine Kennlinie (48) einer der Unterbaugruppen (34, 35) ausgewertet wird, welche einen Einfluss auf einen Durchfluss eines Betriebsstoffs des Brennstoffzellensystems aufweist.

6. Verfahren nach einem der vorhergehenden Ansprüche, **dadurch gekennzeichnet, dass** in zumindest einem Verfahrensschritt, um den Systemparameter zu ermitteln, die Betriebscharakteristik zumindest einer der Unterbaugruppen (34, 35) mittels eines Gleichungssystems mit den Systemparameter in Beziehung gesetzt wird.

7. Verfahren nach einem der vorhergehenden Ansprüche, **dadurch gekennzeichnet, dass** in zumindest einem Verfahrensschritt eine Betriebscharakteristik zumindest einer der Unterbaugruppen (14, 16, 18, 19, 20, 22, 24, 26, 28, 30, 31, 32, 33, 34, 35) des Brennstoffzellensystems zur Implementierung eines Softsensors für einen weiteren Systemparameter verwendet wird, wobei einer der ermittelten Systemparameter zur Ermittlung des anderen verarbeitet wird.

8. Verfahren zumindest nach Anspruch 2, **dadurch gekennzeichnet, dass** zumindest eine der Unterbaugruppen (14, 18, 20, 26), deren Leistungsbilanz erstellt wird, einen Reformer (52) des Brennstoffzellensystems umfasst.

9. Verfahren nach einem der vorhergehenden Ansprüche, **dadurch gekennzeichnet, dass** in zumindest einem Verfahrensschritt eine Brennstoffzufuhr und/oder ein Rezirkulationsdurchfluss des Brennstoffzellensystems in Abhängigkeit von dem ermittelten Systemparameter eingestellt wird.

10. Verfahren nach einem der vorhergehenden Ansprüche, **dadurch gekennzeichnet, dass** in zumindest einem Verfahrensschritt die Betriebscharakteristik des Brennstoffzellensystems mit einer Betriebscharakteristik zumindest eines weiteren Brennstoffzellensystems in Beziehung gesetzt wird.

11. Brennstoffzellensystem mit zumindest einer Recheneinheit (54) zu einer Durchführung eines Verfahrens nach einem der vorhergehenden Ansprüche.

Fig. 1
12
116
22,44
112
18
114
101
14
90
94
20
88
102
92
108
54
52
111
16,110
115
113
104
106
103
105
100
98
34
96
50

Fig. 2
12
116
44
112
114
32
101
90
94
30
88
102
92
108
54
26
52
19,111
110
33,115
31,113
104
35
106
103
105
100
98
96
50

Fig. 3
10
56
40'
75
68
70
40
74
40,40'
60
78
82
80
84
46
64
40'
36
58
42
76
42'
42,42'
62
38
86
46
66
40
42'

Fig. 4

$\dot{V}_{bs}$
48
162''
160''
162'
160'
162
160
$\Delta p$
158

Fig. 5
58
42'
130
128
122
124
134
142
140
146
148
150
152
154
42,42'
76
42
86
62
46
40
66
56
174
82

# Fig. 6

166
1,4
1,2
1
0,8
0,6
0,4
0,2
0
Kc in mol / mol
y = 0,2477x2- 2,5059x + 7,0585
R2= 0,9998
3
3,2
3,4
3,6
3,8
4
4,2
4,4
4,6
4,8
H / C
40

# Fig. 7

168
9,5
9
8,5
8
7,5
7
6,5
6
5,5
5
Ke- in mol / mol
78
y = 0,231x2 - 4,2412x + 21,233
R2 = 0,9981
3
3,2
3,4
3,6
3,8
4
4,2
4,4
4,6
4,8
H / C
40

# Fig. 8

172
1
0,9
0,8
0,7
0,6
0,5
0,4
0,3
0,2
0,1
0
ρ in g (Standard Liter) -1
y = 0,3912x2 - 3,3615x + 7,908
R2 = 0,9969
3
3,2
3,4
3,6
3,8
4
4,2
4,4
4,6
4,8
H / C
40

# Fig. 9

174
Cp in J K$^{-1}$ mol$^{-1}$
41
40
39
38
37
36
35
34
y = 11,799x$^2$- 101,29x + 252,18
$R^2$= 0,9974
3
3,2
3,4
3,6
3,8
4
4,2
4,4
4,6
4,8
H / C
40

# Fig. 10

139
$h_{bs}$ in J K$^{-1}$ mol$^{-1}$
-40000
-45000
-50000
-55000
-60000
-65000
-70000
-75000
-80000
y = 19302x$^2$ - 138113x + 171297
$R^2$= 0,9884
3
3,2
3,4
3,6
3,8
4
4,2
4,4
4,6
4,8
H / C
40